# EUROPEAN PATENT APPLICATION

(11) **EP 4 134 841 A1**
(43) Date of publication of application: **15.02.2023**
(21) Application number: 21795451.0
(22) Date of filing: 20.04.2021
(51) Int. Cl.: G06F 16/953

(54) **NETWORK RESOURCE MANAGEMENT METHOD AND SYSTEM, AND RELATED APPARATUS**

(30) Priority: 30.04.2020 CN 202010366993; 23.11.2020 CN 202011318674
(71) Applicant: Huawei Technologies Co., Ltd., Shenzhen, Guangdong 518129 (CN)
(72) Inventor: XING, Xiaocheng, Shenzhen, Guangdong 518129 (CN); ZHANG, Jian, Shenzhen, Guangdong 518129 (CN); HAN, Yulian, Shenzhen, Guangdong 518129 (CN)
(74) Representative: Thun, Clemens
(86) International application number: PCT/CN2021/088521
(87) International publication number: WO 2021/218715

(57) **Abstract**

This application provides a network resource management method, including: A resource information server receives a query request that carries a performance requirement for a first network resource and that is sent by a resource scheduling server, to determine, based on available capabilities of existing first network resources, first network resources (referred to as matched first network resources) that each meet the performance requirement; and returns identifiers of the matched first network resources, where the first network resource is any one of a CSI, an NSI, an NSSI, or an NF. Then, the resource information server further receives an update request that carries an identifier of an allocated first network resource, and updates an available capability of the allocated first network resource, where the allocated first network resource is in the matched first network resources. According to the method, the first network resource may be allocated based on the available capabilities of the existing first network resources, and the available capability of the allocated first network resource is updated in time after the allocation. This improves feasibility and efficiency of network resource management.

## Description

This application claims priority to Chinese Patent Application No. 202010366993.X, filed with the China National Intellectual Property Administration on April 30, 2020 and entitled "NETWORK RESOURCE MANAGEMENT METHOD AND SYSTEM, AND RELATED APPARATUS", and claims priority to Chinese Patent Application No. 202011318674.8, filed with the China National Intellectual Property Administration on November 23, 2020 and entitled "NETWORK RESOURCE MANAGEMENT METHOD AND SYSTEM, AND RELATED APPARATUS", which are incorporated herein by reference in their entireties.

### TECHNICAL FIELD

This application relates to the field of communications technologies, and in particular, to a network resource management method and system, and a related apparatus.

### BACKGROUND

With rapid development of mobile communication, communication service (Communication Service) requirements are increasingly different. In a 5th generation (5th Generation, 5G) network, there may be a plurality of types of communication services from a perspective of performance requirements, for example, an enhanced mobile broadband (Enhanced Mobile Broadband, EMBB) service type, an ultra-reliable low-latency communication (ultra-reliable low-latency communication, URLLC) service type, and a massive internet of things (Massive Internet of Things, MIoT) service type. The EMBB service type aims to support performance requirements of a high data rate and a high traffic density, and may be applied to, for example, an ultra high-definition video and virtual reality (Virtual Reality, VR). The URLLC service type aims to support performance requirements of a low latency and high reliability, and may be applied to, for example, self-driving and industrial control. The MIoT service type aims to support communication requirements of a large quantity of high-density servers, and may be applied to, for example, a wearable server and a smart grid.

To meet different types of communication services, a physical network may be divided at an end-to-end layer to form a network slice (Network Slice), to implement traffic grouping, tenant isolation, and macro-level resource configuration. The network slice is essentially a logical network running above a shared physical network infrastructure. The network slice may be further divided into one or more network slice subnets (Network Slice Subnet, NSS), for example, a core network slice and a radio access network slice.

When a user sends a service request, a communication service instance (Communication Service Instance, CSI) is allocated to the user according to a service requirement in the service request, to provide a communication service that meets the service requirement. The CSI is implemented by deploying a network slice instance (Network Slice Instance, NSI), and the NSI is a network slice running instance. The NSI is implemented by deploying a network slice subnet instance (Network Slice Subnet Instance, NSSI), and the NSSI is a network slice subnet running instance. The NSSI is implemented by deploying a network function (Network Function, NF), and the NF is a processing function defined in a network and has a functional behavior and interface.

Currently, a network resource model includes only requirement-related information. For example, a network resource model (Network Resource Model, NRM) in the technical standard TS 23.541 of the 3rd Generation Partnership Project (3rd generation partnership project, 3GPP) defines only a requirement model, for example, a service profile (Service Profile) and a slice profile (Slice Profile). The service profile describes a requirement that is related to a network slice and that needs to be supported by the NSI, and the slice profile describes a requirement that is related to a network slice subnet and that needs to be supported by the NSSI. Correspondingly, network resource management is mainly network resource allocation, and network resource allocation is performed according to a resource requirement carried in an allocation request. For example, NSI allocation is performed based on a service profile carried in an NSI allocation request, and NSSI allocation is performed based on a slice profile carried in an NSSI allocation request.

### SUMMARY

Embodiments of this application provide a network resource management method and system, and a related apparatus, to improve feasibility and efficiency of network resource management.

According to a first aspect, this application provides a network resource management method. The method is performed by a resource information server, and the resource information server is deployed in a centralized manner or in a distributed manner.

The resource information server receives a query request sent by a resource scheduling server, where the query request carries a performance requirement for a first network resource, and the query request is used to query a first network resource whose available capability meets the performance requirement. The first network resource herein is any one of a CSI, an NSI, an NSSI, or an NF. In response to the query request, the resource information server determines matched first network resources based on stored available capabilities of existing first network resources, where the matched first network resources are first network resources whose available capabilities each meet the performance requirement; and returns identifiers of the matched first network resources to the resource scheduling server. In this application, an available capability of a network resource is introduced in a network resource management process. During allocation of first network resources, the first network resources whose available capabilities each match the performance requirement can be quickly and effectively determined based on the available capabilities of the existing first network resources.

Further, the resource information server receives an update request, where the update request carries an identifier of an allocated first network resource, and the allocated first network resource is one or more network resources in the matched first network resources, that is, the allocated first network resource is a first network resource that is finally allocated to meet the performance requirement. Then, the resource information server updates an available capability of the allocated first network resource. After the first network resource is allocated, the available capability of the allocated first network resource is updated in time. This improves effectiveness of the stored available capabilities of the existing first network resources, helps efficiently and accurately allocate a first network resource based on an available capability subsequently, and improves feasibility and efficiency of network resource management.

In an implementation, the resource information server obtains, from a management data analytics server, a remaining available capability of the allocated first network resource that exists after the allocation of the first network resource, and updates the available capability of the allocated first network resource to the remaining available capability. Optionally, the update request may further carry the remaining available capability of the allocated first network resource.

In this implementation, the management data analytics server has a relatively strong data analysis capability, and the management data analytics server obtains the remaining available capability of the allocated first network resource, so that a computing resource of the resource information server is not occupied, and the remaining available capability is quickly and accurately calculated.

In an implementation, the resource information server sends a resource change notification to the management data analytics server, where the resource change notification carries the identifier of the allocated first network resource, to indicate that resource information of the allocated first network resource changes. The resource information server receives the remaining available capability, sent by the management data analytics server, of the allocated first network resource that exists after the allocation of the first network resource. The resource change notification triggers the management data analytics server to re-determine the available capability of the allocated first network resource, to obtain the remaining available capability.

In an implementation, the resource information server sends an available capability update request to the management data analytics server, where the available capability update request carries the identifier of the allocated first network resource, to request the management data analytics server to re-determine the available capability of the allocated first network resource. The resource information server receives the remaining available capability, sent by the management data analytics server, of the allocated first network resource that exists after the allocation of the first network resource. The resource information server actively requests the remaining available capability from the management data analytics server.

Optionally, the resource information server further obtains, from a network data analytics server in time, load information of the allocated first network resource that exists after the allocation of the first network resource, and provides the management data analytics server with the load information of the allocated first network resource that exits after the allocation of the first network resource, to determine the remaining available capability.

In this application, after the allocated first network resource is allocated this time, the load information also changes. First, the load information of the allocated first network resource that exists after the allocation of the first network resource is obtained, and then the remaining available capability may be determined based on the load information that exists after the allocation of the first network resource, so that the determined remaining available capability is more accurate and effective.

In an implementation, the remaining available capability is determined based on the resource information of the allocated first network resource, and the resource information of the allocated first network resource includes one or more of the following information: planning information of the allocated first network resource, the load information of the allocated first network resource that exists after the allocation of the first network resource, information about a requirement for the allocated first network resource, an available capability of the allocated first network resource that is determined before the allocation of the first network resource, alarm information of the allocated first network resource, and a correspondence between the allocated first network resource and another network resource. Therefore, the remaining available capability is determined based on a plurality of types of information, so that the determined remaining available capability is more accurate and effective.

Optionally, the resource information server may further store the resource information of the allocated first network resource and provide the management data analytics server with the resource information of the allocated first network resource, to determine the remaining available capability. This prevents the management data analytics server from collecting resource information from different devices to determine the remaining available capability, and improves efficiency of determining the remaining available capability.

Optionally, the available capabilities of the existing first network resources that are stored by the resource information server are obtained through periodical update by the management data analytics server. Because the available capabilities of the existing first network resources change due to various reasons, for example, an unexpected alarm or fault, or scaling of the first network resources, periodically updating the available capabilities of the existing first network resources helps improve effectiveness of the available capabilities of the existing first network resources.

Optionally, when a first network resource is allocated to a to-be-deployed second network resource, the performance requirement for a first network resource is a performance requirement of the to-be-deployed second network resource for a first network resource, and the update request received by the resource information server further carries an identifier of the to-be-deployed second network resource. Therefore, the resource information server further establishes a correspondence (for example, establishes a topology edge) between the to-be-deployed second network resource and the allocated first network resource in response to the update request, where the correspondence indicates that the to-be-deployed second network resource is deployed above the allocated first network resource.

In an implementation, when a first network resource is reallocated to the to-be-deployed second network resource, the to-be-deployed second network resource is deployed above an initial first network resource before the allocation of the first network resource, and the allocated first network resource is reallocated to the to-be-deployed second network resource. The resource information server updates a correspondence between the to-be-deployed second network resource and the initial first network resource to the correspondence between the to-be-deployed second network resource and the allocated first network resource, and may further update an available capability of the initial first network resource.

In an implementation, the resource scheduling server is deployed in a first management device, and the update request is also received from the first management device. In this case, the first management device directly interacts with the resource information server, to query the matched first network resources.

In an implementation, the first network resource is a communication service instance, and the first management device is a communication service management server. That the resource information server receives an update request is specifically: The resource information server receives an update request sent by the communication service management server. In addition, the second network resource is specifically a tenant instance.

In an implementation, the first network resource is a network slice instance, and the first management device is a network slice management server. That the resource information server receives an update request is specifically: The resource information server receives an update request sent by the network slice management server. In addition, the second network resource is specifically a communication service instance.

In an implementation, the first network resource is a network slice subnet instance, and the first management device is a network slice subnet management server. That the resource information server receives an update request is specifically: The resource information server receives an update request sent by the network slice subnet management server. In addition, the second network resource is specifically a network slice instance.

In an implementation, the first network resource is a network function, and the first management device is a network function management server. That the resource information server receives an update request is specifically: The resource information server receives an update request sent by the network function management server. In addition, the second network resource is specifically a network slice subnet instance.

According to a second aspect, this application provides a network resource management method. The method is jointly performed by a plurality of devices.

A first management server sends a performance requirement for a first network resource to a resource information query server, where the first network resource herein is any one of a CSI, an NSI, an NSSI, or an NF. After receiving the performance requirement, the resource information query server determines matched first network resources based on available capabilities of existing first network resources that are stored in a resource information database, and returns an identifier of an allocated first network resource to the first management server, where the matched first network resources are first network resources whose available capabilities each meet the performance requirement, and the allocated first network resource is one or more network resources in the matched first network resources. Therefore, the first management server determines to use the allocated first network resource, that is, the allocated first network resource is a first network resource that is finally allocated to meet the performance requirement. In this application, an available capability of a network resource is introduced in a network resource management process. During allocation of first network resources, the first network resources whose available capabilities each match the performance requirement can be quickly and effectively determined based on the available capabilities of the existing first network resources.

Further, the first management server sends an update request to a resource information management server, where the update request carries an identifier of the allocated first network resource. The resource information management server updates an available capability of the allocated first network resource that is stored in the resource information database. After the first network resource is allocated, the available capability of the allocated first network resource is updated in time. This improves effectiveness of the stored available capabilities of the existing first network resources, helps efficiently and accurately allocate a first network resource based on an available capability subsequently, and improves feasibility and efficiency of network resource management.

In an implementation, the resource information management server obtains, from a management data analytics server, a remaining available capability of the allocated first network resource that exists after the allocation of the first network resource, and updates the available capability of the allocated first network resource that is stored in the resource information database to the remaining available capability.

In this implementation, the management data analytics server has a relatively strong data analysis capability, and the management data analytics server obtains the remaining available capability of the allocated first network resource, so that a computing resource of the resource information server is not occupied, and the remaining available capability is quickly and accurately calculated.

In an implementation, the resource information management server sends a resource change notification to the management data analytics server, where the resource change notification carries the identifier of the allocated first network resource, to indicate that resource information of the allocated first network resource changes. The resource information management server receives the remaining available capability, sent by the management data analytics server, of the allocated first network resource that exists after the allocation of the first network resource. The resource change notification triggers the management data analytics server to re-determine the available capability of the allocated first network resource, that is, the remaining available capability.

In an implementation, the resource information management server sends an available capability update request to the management data analytics server, where the available capability update request carries the identifier of the allocated first network resource, to request the remaining available capability of the allocated first network resource that exists after the allocation of the first network resource. The resource information management server receives the remaining available capability, sent by the management data analytics server, of the allocated first network resource that exists after the allocation of the first network resource. The resource information management server actively requests the remaining available capability from the management data analytics server.

Optionally, the resource information management server further obtains, from a network data analytics server in time, load information of the allocated first network resource that exists after the allocation of the first network resource, and updates load information of the allocated first network resource that is stored in the resource information database to the load information of the allocated first network resource that exists after the allocation of the first network resource. Then, the resource information management server or the resource information query server sends, to the management data analytics server, the load information of the allocated first network resource that exists after the allocation of the first network resource. The remaining available capability is determined based on the load information of the allocated first network resource that exists after the allocation of the first network resource. In this application, after the allocated first network resource is allocated this time, the load information also changes. First, the load information of the allocated first network resource that exists after the allocation of the first network resource is obtained, and then the remaining available capability may be determined based on the load information that exists after the allocation of the first network resource, so that the determined remaining available capability is more accurate and effective.

In an implementation, the management data analytics server determines the remaining available capability based on the resource information of the allocated first network resource, where the resource information of the allocated first network resource includes one or more of the following information: planning information of the allocated first network resource, the load information of the allocated first network resource that exists after the allocation of the first network resource, information about a requirement for the allocated first network resource, an available capability of the allocated first network resource that is determined before the allocation of the first network resource, alarm information of the allocated first network resource, and a correspondence between the allocated first network resource and another network resource. Therefore, the remaining available capability is determined based on a plurality of types of information, so that the determined remaining available capability is more accurate and effective.

Optionally, the resource information of the allocated first network resource is stored in the resource information database. The resource information management server or the resource information query server further sends the resource information of the allocated first network resource to the management data analytics server. This prevents the management data analytics server from collecting resource information from different devices to determine the remaining available capability, and improves efficiency of determining the remaining available capability.

Optionally, the management data analytics server periodically updates the available capabilities of the existing first network resources to the resource information management server. Therefore, the available capabilities of the existing first network resources that are stored in the resource information database may be periodically updated. Because the available capabilities of the existing first network resources change due to various reasons, for example, an unexpected alarm or fault, or scaling of the first network resources, periodically updating the available capabilities of the existing first network resources helps improve effectiveness of the available capabilities of the existing first network resources.

In an implementation, the first management server sends the performance requirement for a first network resource to the resource information query server by using a resource scheduling server. For example, the first management server sends a resource scheduling request to the resource scheduling server, where the resource scheduling request carries the performance requirement for a first network resource; and then the resource scheduling server sends a query request to the resource information query server, where the query request carries the performance requirement. The resource information query server determines, based on the available capabilities of the existing first network resources that are stored in the resource information database, the first network resources whose available capabilities each match the performance requirement, and returns a query response to the resource scheduling server, where the query response carries identifiers of the matched first network resources and the available capabilities of the matched first network resources. Then, the resource scheduling server determines the allocated first network resource based on a scheduling algorithm and the available capabilities of the matched first network resources, and returns the identifier of the allocated first network resource to the first management server.

In an implementation, the resource scheduling server is deployed in a first management device, that is, the first management device provides a resource scheduling function. Specifically, the resource information query server returns the identifiers of the matched first network resources and the available capabilities of the matched first network resources to the first management device. Then, the first management device determines the allocated first network resource from the matched first network resources based on the scheduling algorithm and the available capabilities of the matched first network resources, to determine to use the allocated first network resource.

In the foregoing two implementations, the allocated first network resource is selected based on the scheduling algorithm, so that the allocated first network resource can be an optimal first network resource. This helps optimize overall network resource scheduling, for example, improve network resource utilization.

Optionally, when a first network resource is allocated to a to-be-deployed second network resource, the performance requirement for a first network resource is a performance requirement of the to-be-deployed second network resource for a first network resource, and the update request received by the resource information management server further carries an identifier of the to-be-deployed second network resource. Therefore, the resource information management server further establishes a correspondence (for example, establishes a topology edge) between the to-be-deployed second network resource and the allocated first network resource in response to the update request, where the correspondence indicates that the to-be-deployed second network resource is deployed above the allocated first network resource.

In an implementation, when the first management device reallocates a first network resource to the to-be-deployed second network resource, the to-be-deployed second network resource is deployed above an initial first network resource before the allocation of the first network resource, and the allocated first network resource is reallocated to the to-be-deployed second network resource. The resource information management server updates a correspondence between the to-be-deployed second network resource and the initial first network resource to the correspondence between the to-be-deployed second network resource and the allocated first network resource, and further updates an available capability of the initial first network resource.

Optionally, a second management server sends an allocation request to the first management server, where the allocation request carries the performance requirement of the to-be-deployed second network resource for a first network resource, to request the first management server to allocate a first network resource. After the first management server determines to use the allocated first network resource, the first management server further sends an allocation response to the second management server, where the allocation response carries the identifier of the allocated first network resource, to notify the second management server that the allocation succeeds and notify the allocated first network resource.

In an implementation, the first network resource is a communication service instance, and the first management device is a communication service management server. That the resource information server receives an update request is specifically: The resource information server receives an update request sent by the communication service management server. In addition, the second network resource is specifically a tenant instance.

In an implementation, the first network resource is a network slice instance, and the first management device is a network slice management server. That the resource information server receives an update request is specifically: The resource information server receives an update request sent by the network slice management server. In addition, the second network resource is specifically a communication service instance.

In an implementation, the first network resource is a network slice subnet instance, and the first management device is a network slice subnet management server. That the resource information server receives an update request is specifically: The resource information server receives an update request sent by the network slice subnet management server. In addition, the second network resource is specifically a network slice instance.

In an implementation, the first network resource is a network function, and the first management device is a network function management server. That the resource information server receives an update request is specifically: The resource information server receives an update request sent by the network function management server. In addition, the second network resource is specifically a network slice subnet instance.

The first aspect and the second aspect explain different implementations of the network resource management method in this application. The foregoing implementations may be implemented by using devices in different forms.

According to a third aspect, this application provides a resource information server. The resource information server includes function modules for performing the network resource management method according to any one of the first aspect and the possible designs of the first aspect. Division into the function modules is not limited in this application. The function modules may be correspondingly obtained through division according to the procedure steps of the network resource management method according to the first aspect, or the function modules may be obtained through division according to a specific implementation requirement. The function modules may be implemented by hardware, or may be implemented by hardware by executing corresponding software.

According to a fourth aspect, this application provides a resource information server. The resource information server includes a memory and a processor. The memory is configured to store program code and resource information (for example, an available capability) of a network resource. The processor is configured to invoke the program code to implement the network resource management method according to any one of the first aspect and the possible designs of the first aspect of this application with reference to the resource information.

According to a fifth aspect, this application provides a network resource management system. The system includes a first management server and a resource information server. The first management server is configured to perform the method performed by the first management server according to any one of the second aspect and the possible designs of the second aspect of this application. The resource information server is configured to perform the methods performed by the resource information query server, the resource information database, and the resource information management server according to any one of the second aspect and the possible designs of the second aspect of this application.

Optionally, the system further includes a management data analytics server, configured to perform the method performed by the management data analytics server according to any one of the second aspect and the possible designs of the second aspect of this application.

Optionally, the system further includes a network data analytics server, configured to perform the method performed by the network data analytics server according to any one of the second aspect and the possible designs of the second aspect of this application.

Optionally, the system further includes a resource scheduling server, configured to perform the method performed by the resource scheduling server according to any one of the second aspect and the possible designs of the second aspect of this application.

Optionally, the system further includes a second management server, configured to perform the method performed by the second management server according to any one of the second aspect and the possible designs of the second aspect of this application.

According to a sixth aspect, this application provides a network resource management system. The system includes a first management server, a resource information query server, a resource information database, and a resource information management server. The first management server is configured to perform the method performed by the first management server according to any one of the second aspect and the possible designs of the second aspect of this application. The resource information query server is configured to perform the method performed by the resource information query server according to any one of the second aspect and the possible designs of the second aspect of this application. The resource information database is configured to perform the method performed by the resource information database according to any one of the second aspect and the possible designs of the second aspect of this application. The resource information management server is configured to perform the method performed by the resource information management server according to any one of the second aspect and the possible designs of the second aspect of this application.

Optionally, the system further includes a management data analytics server, configured to perform the method performed by the management data analytics server according to any one of the second aspect and the possible designs of the second aspect of this application.

Optionally, the system further includes a network data analytics server, configured to perform the method performed by the network data analytics server according to any one of the second aspect and the possible designs of the second aspect of this application.

Optionally, the system further includes a resource scheduling server, configured to perform the method performed by the resource scheduling server according to any one of the second aspect and the possible designs of the second aspect of this application.

According to a seventh aspect, this application provides a network resource management method, and the method includes:
receiving a resource change notification, where the resource change notification carries an identifier of a first network resource whose resource information changes, and the first network resource is one of a communication service instance, a network slice instance, a network slice subnet instance, or a network function;
determining a remaining available capability of the first network resource based on the resource information of the first network resource; and
sending the remaining available capability of the first network resource to a resource information management server to update an available capability of the first network resource.

In an implementation, the resource information of the first network resource includes one or more of the following information: planning information of the first network resource, load information of the first network resource, information about a requirement for the first network resource, an available capability of the first network resource that is determined before this resource information change, alarm information of the first network resource, and a correspondence between the first network resource and another network resource. Therefore, the remaining available capability is determined based on a plurality of types of information, so that the determined remaining available capability is more accurate and effective.

In an implementation, the resource change notification is sent by a first management server or the resource information management server. The method is performed by a management data analytics server.

Optionally, the method further includes: obtaining the resource information of the first network resource from the resource information management server or a resource information query server.

Optionally, the method further includes: receiving a performance requirement that is for a first network resource and that is sent by the first management server; obtaining matched first network resources according to the performance requirement for a first network resource, where available capabilities of the matched first network resources each meet the performance requirement for a first network resource; and returning identifiers of the matched first network resources to the first management server. The foregoing first network resource whose resource information changes is an allocated first network resource, and the allocated first network resource is one or more network resources in the matched first network resources.

Optionally, the method further includes: receiving a performance requirement that is for a first network resource and that is sent by the first management server; obtaining matched first network resources according to the performance requirement for a first network resource, where available capabilities of the matched first network resources each meet the performance requirement for a first network resource; determining an allocated first network resource from the matched first network resources based on a scheduling algorithm; and returning an identifier of the allocated first network resource to the first management server. The foregoing first network resource whose resource information changes is an allocated first network resource, and the allocated first network resource is one or more network resources in the matched first network resources.

In an implementation, the resource information of the first network resource includes one or more of the following information: planning information of the allocated first network resource, load information of the allocated first network resource that exists after the allocation of the first network resource, information about a requirement for the allocated first network resource, an available capability of the allocated first network resource that is determined before the allocation of the first network resource, alarm information of the allocated first network resource, and a correspondence between the allocated first network resource and another network resource. Therefore, the remaining available capability is determined based on a plurality of types of information, so that the determined remaining available capability is more accurate and effective.

In an implementation, the obtaining matched first network resources according to the performance requirement for a first network resource includes: sending a query request to the resource information query server, where the query request carries the performance requirement for a first network resource, and the query request is used to query a first network resource whose available capability meets the performance requirement; and receiving information that is about the matched first network resources and that is returned by the resource information query server. Specifically, the matched first network resources are determined based on available capabilities of existing first network resources. Further, the management data analytics server periodically updates the available capabilities of the existing first network resources to the resource information management server.

According to an eighth aspect, this application provides a management data analytics server. The management data analytics server includes function modules for performing the network resource management method according to any one of the seventh aspect and the possible designs of the seventh aspect. Division into the function modules is not limited in this application. The function modules may be correspondingly obtained through division according to the procedure steps of the network resource management method according to the seventh aspect, or the function modules may be obtained through division according to a specific implementation requirement. The function modules may be implemented by hardware, or may be implemented by hardware by executing corresponding software. For example, the management data analytics server includes a receiving module, a sending module, and a processing module.

According to a ninth aspect, this application provides a management data analytics server. The management data analytics server includes a memory and a processor. The memory is configured to store program code. The processor is configured to invoke the program code to implement the network resource management method according to any one of the seventh aspect and the possible designs of the seventh aspect of this application.

According to a tenth aspect, this application provides a readable storage medium. The readable storage medium stores instructions. When the instructions are run, a device (for example, a resource information server) that runs the instructions can implement the network resource management method according to the first aspect or the seventh aspect of this application.

According to an eleventh aspect, this application provides a computer program product including instructions. When the computer program product runs on a computer, the computer is enabled to implement the network resource management method according to the first aspect or the seventh aspect of this application.

According to a twelfth aspect, this application provides a chip. When the chip runs, the network resource management method according to the first aspect or the seventh aspect of this application can be implemented.

According to a thirteenth aspect, this application provides a network resource management method. The method is jointly performed by a plurality of devices.

A first management server sends a performance requirement for a first network resource to a management data analytics server, where the first network resource herein is any one of a CSI, an NSI, an NSSI, or an NF. After receiving the performance requirement, the management data analytics server obtains matched first network resources, and returns identifiers of the matched first network resources to the first management server, where available capabilities of the matched first network resources each meet the performance requirement. The first management server determines to use an allocated first network resource, where the allocated first network resource is one or more network resources in the matched first network resources.

Further, the first management server triggers update of an available capability of the allocated first network resource.

In an implementation, that the management data analytics server obtains matched first network resources includes: The management data analytics server sends a query request to a resource information query server, where the query request carries the performance requirement for a first network resource; and receives the identifiers of the matched first network resources that are returned by the resource information query server, where the matched first network resources are determined based on available capabilities of existing first network resources.

Optionally, the management data analytics server periodically updates the available capabilities of the existing first network resources to a resource information management server.

Optionally, the method further includes: After receiving the query request, the resource information query server determines the matched first network resources based on the available capabilities of the existing first network resources that are stored in a resource information database, and returns the identifiers of the matched first network resources to the management data analytics server. It should be understood that the resource information query server may return information about the matched first network resources to the management data analytics server, where the information includes the identifiers, the available capabilities, load, and/or the like of the matched first network resources.

In an implementation, that the first management server triggers update of an available capability of the allocated first network resource includes:
The first management server sends an update request to a resource information management server, where the update request carries an identifier of the allocated first network resource, and the update request is used to trigger update of the available capability of the allocated first network resource. Further, the management data analytics server receives a resource change notification, where the resource change notification carries the identifier of the allocated first network resource, to indicate that resource information of the allocated first network resource changes, and the resource change notification is sent after the resource information management server receives the update request. The management data analytics server determines a remaining available capability of the allocated first network resource that exists after the allocation of the first network resource, and sends the remaining available capability to the resource information management server, where the remaining available capability is used to update the available capability of the allocated first network resource.

In an implementation, that the first management server triggers update of an available capability of the allocated first network resource includes:
The first management server sends a resource change notification, where the resource change notification carries an identifier of the allocated first network resource, to indicate that resource information of the allocated first network resource changes. After receiving the resource change notification, the management data analytics server determines a remaining available capability of the allocated first network resource that exists after the allocation of the first network resource, and sends the remaining available capability to the resource information management server, where the remaining available capability is used to update the available capability of the allocated first network resource.

In an implementation, that the management data analytics server determines a remaining available capability of the allocated first network resource that exists after the allocation of the first network resource includes:

The management data analytics server determines, based on the resource information of the allocated first network resource, the remaining available capability of the allocated first network resource that exists after the allocation of the first network resource, where the resource information of the allocated first network resource includes one or more of the following information: planning information of the allocated first network resource, load information of the allocated first network resource that exists after the allocation of the first network resource, information about a requirement for the allocated first network resource, an available capability of the allocated first network resource that is determined before the allocation of the first network resource, alarm information of the allocated first network resource, and a correspondence between the allocated first network resource and another network resource.

Optionally, the management data analytics server obtains the resource information of the allocated first network resource from the resource information management server or a resource information query server.

In an implementation, that the first management server determines to use an allocated first network resource includes: The first management server selects the allocated first network resource from the matched first network resources based on a scheduling algorithm.

Optionally, the method further includes: The resource information management server receives the remaining available capability, sent by the management data analytics server, of the allocated first network resource that exists after the allocation of the first network resource, and updates the available capability of the allocated first network resource that is stored in the resource information database to the remaining available capability.

Optionally, the method further includes: The resource information management server obtains, from a network data analytics server, load information of the allocated first network resource that exists after the allocation of the first network resource, and updates load information of the allocated first network resource that is stored in the resource information database to the load information of the allocated first network resource that exists after the allocation of the first network resource. Further, the resource information management server or the resource information query server sends, to the management data analytics server, the load information of the allocated first network resource that exists after the allocation of the first network resource, where the remaining available capability is determined based on the load information of the allocated first network resource that exists after the allocation of the first network resource.

It should be understood that this aspect may further include the solution according to any one of the foregoing aspects. Details are not described herein again.

According to a fourteenth aspect, this application provides a network resource management system. The system includes a first management server and a management data analytics server. The first management server is configured to perform the method performed by the first management server according to any one of the thirteenth aspect and the possible designs of the thirteenth aspect of this application. The management data analytics server is configured to perform the method performed by the management data analytics server according to any one of the thirteenth aspect and the possible designs of the thirteenth aspect of this application.

Optionally, the system further includes a resource information query server, a resource information database, and/or a resource information management server. The resource information query server, the resource information database, and/or the resource information management server are/is configured to perform the method performed by the resource information query server, the resource information database, and/or the resource information management server according to any one of the thirteenth aspect and the possible designs of the thirteenth aspect of this application.

According to a fifteenth aspect, this application provides a network resource management method. The method is jointly performed by a plurality of devices.

A first management server sends a performance requirement for a first network resource to a management data analytics server, where the first network resource herein is any one of a CSI, an NSI, an NSSI, or an NF. After receiving the performance requirement, the management data analytics server obtains an allocated first network resource, and returns an identifier of the allocated first network resource to the first management server, where an available capability of the allocated first network resource meets the performance requirement.

Further, the first management server determines to use the allocated first network resource, and triggers update of the available capability of the allocated first network resource.

In an implementation, that the management data analytics server obtains an allocated first network resource includes: The management data analytics server obtains identifiers of matched first network resources according to the performance requirement for a first network resource, where the matched first network resources are determined based on available capabilities of existing first network resources; and determines the allocated first network resource from the matched first network resources.

In an implementation, that the management data analytics server obtains identifiers of matched first network resources according to the performance requirement for a first network resource includes: The management data analytics server sends a query request to a resource information query server, where the query request carries the performance requirement for a first network resource; and receives the identifiers of the matched first network resources that are returned by the resource information query server.

In an implementation, that the management data analytics server determines the allocated first network resource from the matched first network resources includes: The management data analytics server determines the allocated first network resource from the matched first network resources based on a scheduling algorithm.

Optionally, the management data analytics server periodically updates the available capabilities of the existing first network resources to a resource information management server.

Optionally, the method further includes: After receiving the query request, the resource information query server determines the matched first network resources based on the available capabilities of the existing first network resources that are stored in a resource information database, and returns the identifiers of the matched first network resources to the management data analytics server. It should be understood that the resource information query server may return information about the matched first network resources to the management data analytics server, where the information includes the identifiers, the available capabilities, load, and/or the like of the matched first network resources. Further, the management data analytics server determines the allocated first network resource based on the scheduling algorithm and the information about the matched first network resources.

In an implementation, that the first management server triggers update of the available capability of the allocated first network resource includes:
The first management server sends an update request to the resource information management server, where the update request carries the identifier of the allocated first network resource, and the update request is used to trigger update of the available capability of the allocated first network resource. Further, the management data analytics server receives a resource change notification, where the resource change notification carries the identifier of the allocated first network resource, to indicate that resource information of the allocated first network resource changes, and the resource change notification is sent after the resource information management server receives the update request. The management data analytics server determines a remaining available capability of the allocated first network resource that exists after the allocation of the first network resource, where the remaining available capability is used to update the available capability of the allocated first network resource.

In an implementation, that the first management server triggers update of the available capability of the allocated first network resource includes:
The first management server sends a resource change notification, where the resource change notification carries an identifier of the allocated first network resource, to indicate that resource information of the allocated first network resource changes. After receiving the resource change notification, the management data analytics server determines a remaining available capability of the allocated first network resource that exists after the allocation of the first network resource, and sends the remaining available capability to the resource information management server, where the remaining available capability is used to update the available capability of the allocated first network resource.

In an implementation, that the management data analytics server determines a remaining available capability of the allocated first network resource that exists after the allocation of the first network resource includes:
The management data analytics server determines, based on the resource information of the allocated first network resource, the remaining available capability of the allocated first network resource that exists after the allocation of the first network resource, where the resource information of the allocated first network resource includes one or more of the following information: planning information of the allocated first network resource, load information of the allocated first network resource that exists after the allocation of the first network resource, information about a requirement for the allocated first network resource, an available capability of the allocated first network resource that is determined before the allocation of the first network resource, alarm information of the allocated first network resource, and a correspondence between the allocated first network resource and another network resource.

Optionally, the management data analytics server obtains the resource information of the allocated first network resource from the resource information management server or a resource information query server.

Optionally, the method further includes: The resource information management server receives the remaining available capability, sent by the management data analytics server, of the allocated first network resource that exists after the allocation of the first network resource, and updates the available capability of the allocated first network resource that is stored in the resource information database to the remaining available capability.

Optionally, the method further includes: The resource information management server obtains, from a network data analytics server, load information of the allocated first network resource that exists after the allocation of the first network resource, and updates load information of the allocated first network resource that is stored in the resource information database to the load information of the allocated first network resource that exists after the allocation of the first network resource. Further, the resource information management server or the resource information query server sends, to the management data analytics server, the load information of the allocated first network resource that exists after the allocation of the first network resource, where the remaining available capability is determined based on the load information of the allocated first network resource that exists after the allocation of the first network resource.

It should be understood that this aspect may further include the solution according to any one of the foregoing aspects. Details are not described herein again.

According to a sixteenth aspect, this application provides a network resource management system. The system includes a first management server and a management data analytics server. The first management server is configured to perform the method performed by the first management server according to any one of the fifteenth aspect and the possible designs of the fifteenth aspect of this application. The management data analytics server is configured to perform the method performed by the management data analytics server according to any one of the fifteenth aspect and the possible designs of the fifteenth aspect of this application.

Optionally, the system further includes a resource information query server, a resource information database, and/or a resource information management server. The resource information query server, the resource information database, and/or the resource information management server are/is configured to perform the method performed by the resource information query server, the resource information database, and/or the resource information management server according to any one of the fifteenth aspect and the possible designs of the fifteenth aspect of this application.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of an architecture of a network resource management system according to an embodiment of this application;
FIG. 2 is a diagram of an architecture of another network resource management system according to an embodiment of this application;
FIG. 3 is a schematic diagram of a network resource topology according to an embodiment of this application;
FIG. 4A and FIG. 4B are a flowchart of a network resource management method according to an embodiment of this application;
FIG. 5 is a flowchart of a method for managing an available capability of a network resource according to an embodiment of this application;
FIG. 6 is a flowchart of another method for managing an available capability of a network resource according to an embodiment of this application;
FIG. 7A to FIG. 7D are a flowchart of another network resource management method according to an embodiment of this application;
FIG. 8 is a schematic diagram of a structure of a resource information server according to an embodiment of this application;
FIG. 9 is a schematic diagram of a structure of a computer device including a plurality of devices according to an embodiment of this application; and
FIG. 10 is a schematic diagram of a structure of a management data analytics server according to an embodiment of this application.

### DESCRIPTION OF EMBODIMENTS

The following describes embodiments of this application with reference to the accompanying drawings in embodiments of this application.

To make persons skilled in the art understand the solutions in this application better, the following describes the technical solutions in embodiments of this application with reference to the accompanying drawings in embodiments of this application. It is clear that the described embodiments are merely some but not all of embodiments of this application. All other embodiments obtained by persons of ordinary skill in the art based on embodiments of this application without creative efforts shall fall within the protection scope of this application.

This application is applicable to a 5th generation (5G) mobile communications network architecture or a future network.

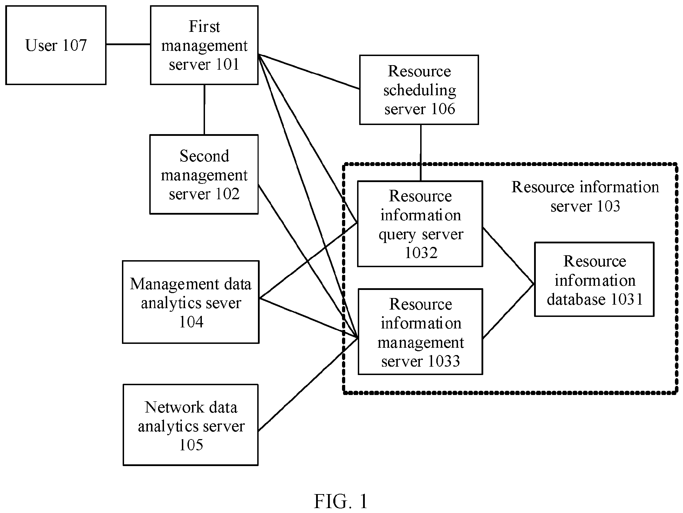

**FIG. 1** **is a diagram of an architecture of a system to which an embodiment of this application is applied. The following briefly describes devices in the system to which this embodiment of this application is applied and main functions of the devices. The following embodiments of this application further provide detailed descriptions.**

The system includes: **a first management server 101,** configured to deploy and manage a first network resource. Specifically, the first management server 101 is configured to: receive a performance requirement for a first network resource, and allocate a first network resource according to the performance requirement, where an available capability of the allocated first network resource meets the performance requirement. The first management server 101 is further configured to send an update message to a resource information server 103, to trigger the resource information server 103 to update the available capability of the allocated first network resource. Therefore, when the first network resource is shared, the available capability of the first network resource is updated in time after allocation. The performance requirement for a first network resource may be from a user 107, or may be from a second management server 102. The user 107 has a requirement for a first network resource, and is specifically a user who subscribes to a first network resource, a network operation and maintenance engineer, or the like. It should be understood that the user 107 interacts with the first management server 101 by using user equipment (not shown in the figure). The user equipment is a device having a communication function, and is specifically a mobile phone, a desktop computer, a tablet computer, a laptop portable computer, or the like.

The system may further include: **the second management server 102,** configured to deploy and manage a second network resource. The second network resource is deployed above the first network resource. In this application, the second network resource is also referred to as an upper-level network resource of the first network resource. Similarly, if the first network resource is deployed above a third network resource, the third network resource is referred to as a lower-level network resource of the first network resource (a management server of the third network resource is not shown in the figure).

When the second management server 102 is to deploy the second network resource, the second management server 102 requests a first network resource from the first management server 101 to deploy the second network resource. Specifically, the second management server 102 is configured to: send a performance requirement of the to-be-deployed second network resource for a first network resource to the first management server 101, and receive an identifier that is of the allocated first network resource and that is returned by the first management server 101. Therefore, the to-be-deployed second network resource is deployed above the allocated first network resource.

Correspondingly, the performance requirement that is for a first network resource and that is received by the first management server 101 is specifically the performance requirement that is of the to-be-deployed second network resource for a first network resource and that is sent by the second management server 102. The first management server 101 is further configured to trigger the resource information server 103 to establish a correspondence (also referred to as a mapping relationship) between the to-be-deployed second network resource and the allocated first network resource. Therefore, a second network resource that has been deployed above the first network resource is very clear. This helps maintain information about the available capability of the first network resource.

If the to-be-deployed second network resource has been deployed above a first network resource (which may be referred to as an initial first network resource) before the allocation of the first network resource, that is, the allocation of the first network resource belongs to reallocation, the first management server 101 further triggers the resource information server 103 to update a correspondence between the to-be-deployed second network resource and the initial first network resource to the correspondence between the to-be-deployed second network resource and the allocated first network resource. The first management server 101 is further configured to trigger the resource information server 103 to update an available capability of the initial first network resource. Therefore, the correspondence between the first network resource and the second network resource is dynamically updated. In addition, because a resource that is of the initial first network resource and that is occupied by the to-be-deployed second network resource is released, the available capability of the initial first network resource is updated in time. This facilitates subsequent resource allocation.

The system may further include: **the resource information server 103,** configured to: store and manage resource information of network resources, and provide a query about the resource information of the network resources. The resource information of the network resources includes one or more of the following: property information of a first network resource, a relationship between first network resources, property information of a second network resource, a correspondence between a first network resource and a second network resource, a relationship between second network resources, and the like. The property information may include one or more of the following: an available capability, load information, requirement information, planning information, alarm information, and the like. The following embodiments of this application further provide detailed descriptions. The resource information server 103 may specifically include a resource information database 1031, a resource information query server 1032, and a resource information management server 1033.

The resource information database 1031 is configured to store the resource information of the network resources, and the resource information database 1031 may be deployed in a centralized or distributed manner. The resource information is stored in a topology form. Each topology node stores property information of a network resource of the node. The topology nodes are connected through a topology edge, to indicate a correspondence between the nodes. It should be understood that the topology edge may be a directed edge. For example, if an edge between a first network resource node and a second network resource node is a directed edge, the directed edge is used to describe a correspondence in which a second network resource is deployed above a first network resource. Alternatively, the topology edge may be an undirected edge. For example, if an edge between first network resource nodes is an undirected edge, the undirected edge is used to describe a correspondence between a plurality of first network resources above which a same second network resource is deployed. Certainly, a correspondence between network resources may alternatively be stored in a topology node as property information, and therefore no topology edge is required. This is not limited in this application. It should be understood that the resource information may alternatively be stored in another form, for example, a table. In this embodiment of this application, the topology is used as an example for description.

The resource information query server 1032 is configured to query the resource information, for example, query information about first network resources based on identifiers of the first network resources, to obtain a set of first network resources that meet a condition. Specifically, the resource information query server 1032 is configured to: receive a query request, where the query request carries the performance requirement for a first network resource; determine, based on available capabilities of existing first network resources that are stored in the resource information database 1031, first network resources whose available capabilities each meet the performance requirement (referred to as matched first network resources for short); and return identifiers of the matched first network resources. Therefore, when the first network resources are shared, the stored available capabilities of the existing first network resources are matched against the performance requirement, to efficiently and accurately determine the first network resources that each can meet the performance requirement.

The resource information management server 1033 is configured to manage the resource information, for example, perform an operation such as addition, update, or deletion on the resource information. Specifically, the resource information management server 1033 may be configured to update the available capabilities of the first network resources and/or the correspondence between a first network resource and a second network resource, where the available capabilities of the first network resources and the correspondence between a first network resource and a second network resource are stored in the resource information database 1031. The first management server 101 is configured to send an update request that carries the identifier of the allocated first network resource to the resource information management server, to trigger the resource information management server 1033 to update the available capability of the allocated first network resource that is stored in the resource information database 1031. The update request further carries an identifier of the to-be-deployed second network resource, to trigger the resource information management server 1033 to establish the correspondence between the to-be-deployed second network resource and the allocated first network resource in the resource information database 1031. Therefore, the first management server 101 may trigger the resource information management server 1033 to update the available capabilities of the first network resources and the correspondence between a first network resource and a second network resource in time.

It should be understood that the resource information server 103 may be deployed in a centralized manner. For example, the resource information database 1031, the resource information query server 1032, and the resource information management server 1033 are deployed together. Alternatively, the resource information server 103 may be deployed in a distributed manner. For example, the resource information database 1031, the resource information query server 1032, and the resource information management server 1033 are deployed in different physical devices. In addition, functions of the resource information server 103 may be deployed in one or more independent physical devices, or may be deployed together with one or more other servers. For example, the resource information server 103 and an MDAS 104 are deployed together. This is not limited in this embodiment of this application.

The system may further include: **the management data analytics server** (Management Data Analytics Server, MDAS) 104, configured to provide a management data analytics function (Management Data Analytics Function, MDAF). In this application, the MDAS 104 is configured to provide the available capabilities of the network resources for the resource information server 103. Specifically, the MDAS 104 periodically determines the available capabilities of the first network resources, to periodically provide the available capabilities of the first network resources for the resource information management server 1033 (periodic update).

In addition, the MDAS 104 may further re-determine and update available capabilities in the resource information database 1031 based on a change of the resource information stored in the resource information database (event-triggered update). For example, after receiving the update request that carries the identifier of the allocated first network resource, the resource information management server 1033 sends a resource change notification to the MDAS 104, to notify the MDAS 104 that the available capability of the allocated first network resource changes, to trigger the MDAS 104 to re-determine a remaining available capability of the allocated first network resource that exists after the allocation of the first network resource, and provide the remaining available capability for the resource information management server 1033.

It should be understood that functions of the MDAS 104 may be deployed in one or more independent physical devices, or may be deployed together with one or more other servers. This is not limited in this embodiment of this application.

The system may further include: **a network data analytics server** (Network Data Analytics Server, NWDAS) 105, configured to provide a network data analytics function (Network Data Analytics Function, NWDAF). In this application, the NWDAS 105 is configured to provide the load information of the network resources for the resource information server 103. Specifically, the NWDAS 105 periodically determines and provides the load information of the first network resources for the resource information management server 1033 (periodic update). In addition, the NWDAS 105 further updates load information in the resource information database 1031 based on a change of the resource information stored in the resource information database (event-triggered update). For example, after receiving the update request that carries the identifier of the allocated first network resource, the resource information management server 1033 sends a resource change notification to the NWDAS 105, to trigger the NWDAS 105 to re-determine load information of the allocated first network resource that exists after the allocation of the first network resource, and provide the resource information management server 1033 with the load information of the allocated first network resource that exists after the allocation of the first network resource.

It should be understood that functions of the NWDAS 105 may be deployed in one or more independent physical devices, or may be deployed together with one or more other servers. This is not limited in this embodiment of this application.

The system may further include: **a resource scheduling server 106.** The resource scheduling server 106 is configured to perform resource scheduling on the first network resources based on a scheduling algorithm, for example, select an appropriate first network resource. Specifically, the resource scheduling server 106 is configured to: after receiving the performance requirement that is for a first network resource and that is sent by the first management server 101, query, according to the performance requirement, the resource information query server 1032 for first network resources whose available capabilities each meet the performance requirement (also referred to as matched first network resources for short), to determine the allocated first network resource from the matched first network resources based on the scheduling algorithm, and return the allocated first network resource to the first management server 101. Therefore, the allocated first network resource can meet both the performance requirement and another resource scheduling requirement, for example, a quality of service (Quality of Service, QoS) requirement. This helps optimize resource scheduling.

The resource scheduling server 106 is configured to store one or more scheduling algorithms, and may further configure an algorithm plug-in to upload, update, or delete a scheduling algorithm. When there are a plurality of scheduling algorithms used for resource scheduling, the resource scheduling server 106 is further configured to configure weights of the scheduling algorithms, to determine a final result based on results of the plurality of scheduling algorithms and the weights corresponding to the scheduling algorithms.

It should be understood that functions of the resource scheduling server 106 may be deployed in one or more independent physical devices, or may be deployed together with one or more other servers. In addition, the functions of the resource scheduling server 106 may be deployed in a plurality of physical devices. This is not limited in this embodiment of this application. In a possible implementation, the resource scheduling server 106 and the first management server 101 are deployed together. In this case, it may also be considered that the first management server 101 provides the functions of the resource scheduling server 106. In a possible implementation, the resource scheduling server 106 and the MDAS 104 are deployed together. In this case, it may also be considered that the MDAS 104 provides the functions of the resource scheduling server 106. In a possible implementation, some functions of the resource scheduling server 106 are deployed in the first management server 101, and the other functions are deployed in the MDAS 104. For example, a function of the resource scheduling server 106 for querying the matched first network resources is deployed in the MDAS 104, and a function of the resource scheduling server 106 for determining the allocated first network resource from the matched first network resources is deployed in the first management server 101.

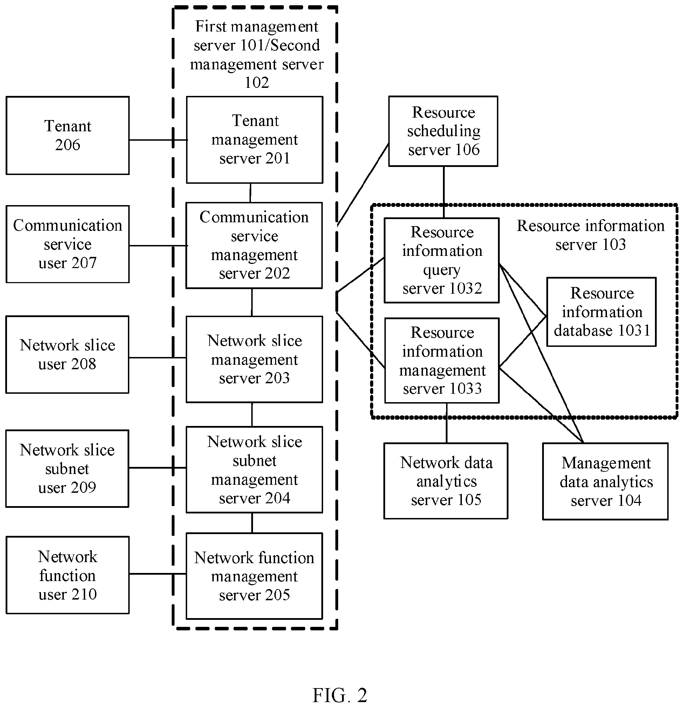

**FIG. 2** **is a diagram of an architecture of another system to which an embodiment of this application is applied. The following further describes existing servers that are specifically the first management server 101 and the second management server 102 in** **FIG. 1****, network resources that are specifically included, and specific available capabilities of the network resources. In addition, this embodiment of this application further provides definitions of a capability model and a load model in a network resource model and a definition of a network resource topology.**

**A communication service management server** (Communication Service Management Server, CSMS) 202 is a device configured to provide a communication service management function (Communication Service Management Function, CSMF). The CSMS 202 is configured to deploy and manage a CSI.

Specifically, the CSMS 202 is configured to receive a performance requirement for a CSI. The performance requirement for a CSI is from a communication service user 207. The performance requirement is a performance requirement in a service level agreement (Service Level Agreement, SLA). The communication service user 207 is a user having a communication service requirement, for example, a user who subscribes to a communication service, for example, an operator. The communication service user 207 may propose the performance requirement for a CSI to the CSMS 202 by using a business support system (Business Support System, BSS). For example, an automobile transportation company A (the communication service user 207) expands a self-driving service, and therefore has the following requirement on a communication service that supports self-driving: a low latency, so that a control instruction sent by a driving controller can be quickly sent to an automobile. Therefore, the automobile transportation company A logs in to the BSS by using user equipment, and negotiates the SLA with the CSMS 202, that is, proposes the performance requirement for a CSI (low latency) to the CSMS 202. In addition, the SLA may further include other requirements, such as a signal coverage area and stability.

When there is a sharable CSI and there is an available CSI, the CSMS 202 is configured to obtain an identifier of an allocated CSI from existing CSIs according to the performance requirement for a CSI, where an available capability of the allocated CSI meets the performance requirement. For specific content, refer to descriptions in other embodiments of this application. The first management server 101 needs to be replaced with the CSMS 202, and the first network resource needs to be replaced with the CSI. Details are not described herein again. In this case, the user 107 in FIG. 1 is specifically the communication service user 207.

When there is no sharable CSI or no available CSI, the CSMS 202 is configured to create a new CSI. Specifically, the CSMS 202 is configured to: convert the performance requirement for a CSI into a performance requirement for a network slice instance (NSI), and send the performance requirement for an NSI to a network slice management server (Network Slice Management Server, NSMS) 203 through an interface with the NSMS 203, to request the NSMS 203 to allocate an NSI to deploy the CSI.

The foregoing self-driving service is still used as an example. For example, if the automobile transportation company A does not agree to share a CSI, or there is no available CSI that can meet the SLA proposed by the automobile transportation company A, the CSMS 202 creates a new CSI to serve the automobile transportation company A. The new CSI is deployed over an NSI. The NSI encapsulates a resource of a network slice, and supports running of the CSI. Correspondingly, the requirement for a low latency of a CSI in the SLA is converted into the performance requirement for an NSI, for example, a URLLC-type NSI or a minimum latency of the NSI. Therefore, the CSMS 202 requests the NSMS 203 to allocate the NSI to deploy the new CSI.

When there is a sharable CSI, the communication service user 207 that shares the CSI is referred to as a tenant 206. In addition, a tenant instance (Tenant Instance, TI) is abstracted by using a tenant as a unit, and a tenant management server 201 is disposed to perform unified TI management. Therefore, the performance requirement for a CSI may alternatively be received from the tenant management server 201, and is specifically a performance requirement of a TI for a CSI. In this case, the tenant management server 201 is configured to implement functions of the second management server 102. Correspondingly, the second network resource is a TI. The foregoing self-driving service is still used as an example. For example, if the automobile transportation company A and an automobile transportation company B share a CSI, for example, CSI-1, a communication service provided by CSI-1 for the automobile transportation company A may be abstracted as TI-A, and a communication service provided by CSI-1 for the automobile transportation company B may be abstracted as TI-B. The tenant management server 201 performs unified TI-A and TI-B management.

**The tenant management server 201** is a device configured to provide a tenant management function. The tenant management server 201 is deployed in the BSS, or may be deployed in an independent physical device. Specifically, the tenant management server 201 is configured to: receive the performance requirement for a TI from the tenant 206, and convert the performance requirement for a TI into the performance requirement for a CSI. It should be understood that the performance requirement for a TI may be the same as the performance requirement for a CSI. In this case, no performance requirement conversion is performed. The tenant management server 201 is further configured to send the performance requirement for a CSI to the CSMS 202 through an interface with the CSMS 202, to request the CSMS 202 to allocate a CSI to deploy the TI.

**The network slice management server** (NSMS) **203** is a device configured to provide a network slice management function (Network Slice Management Function, NSMF). The NSMS 203 is configured to deploy and manage an NSI.

Specifically, the NSMS 203 is configured to receive a performance requirement for an NSI. The performance requirement for an NSI is specifically a service profile (Service Profile), a key performance indicator (Key Performance Indicator, KPI) in the service profile, or the like. The performance requirement for an NSI is from a network slice user 208. The network slice user 208 is a user having a network slice requirement, and is specifically a user who subscribes to a network slice, network operation and maintenance personnel, or the like. In this case, the user 107 in FIG. 1 is specifically the network slice user 208. It should be understood that authorized access of the NSMS 203 may be provided for the network slice user 208, so that the network slice user 208 requests an NSI from the NSMS 203, and uses the obtained NSI for a communication service of the network slice user.

The performance requirement for an NSI may alternatively be from the CSMS 202, and is specifically a performance requirement of a CSI for an NSI. In this case, the CSMS 202 is configured to implement functions of the second management server 102. Correspondingly, the second network resource is a CSI.

When there is a sharable NSI and there is an available NSI, the NSMS 203 is configured to obtain an identifier of an allocated NSI from existing NSIs according to the performance requirement for an NSI, where an available capability of the allocated NSI meets the performance requirement. For specific content, refer to descriptions in other embodiments of this application. The first management server 101 needs to be replaced with the NSMS 203, and the first network resource needs to be replaced with the NSI. Details are not described herein again.

When there is no sharable NSI or no available NSI, the NSMS 203 is configured to create a new NSI. Specifically, the NSMS 203 is configured to: convert the performance requirement for an NSI into a performance requirement for a network slice subnet instance (NSSI), and send the performance requirement for an NSSI to a network slice subnet management server (Network Slice Subnet Management Server, NSSMS) 204 through an interface with the NSSMS 204, to request the NSSMS 204 to allocate an NSSI to deploy the NSI. It should be understood that the performance requirement for an NSI may be converted into a plurality of performance requirements for an NSSI, and the plurality of performance requirements for an NSSI may be sent to a plurality of different network slice subnet management servers 204.

The foregoing self-driving service is still used as an example. When the CSMS 202 requests an NSI to deploy a new CSI, the NSMS 203 determines that there is no available NSI. In this case, the NSMS 203 needs to create a new NSI. A network slice may be divided into a plurality of network slice subnets, such as an access network slice and a core network slice. Correspondingly, the NSI may be divided into a radio access network-network slice subnet instance (Radio Access Network-Network Slice Subnet Instance, RAN-NSSI), a core network-network slice subnet instance (Core Network-Network Slice Subnet Instance, CN-NSSI), and the like. Therefore, the NSMS 203 needs to request to allocate an NSSI to the new NSI. First, the performance requirement for an NSI is converted into the performance requirement for an NSSI, for example, converted into a performance requirement for a RAN-NSSI or a performance requirement for a CN-NSSI. Then, the NSMS 203 requests the NSSMS 204 to allocate the NSSI according to the performance requirement for an NSSI, to deploy the new NSI.

**The network slice subnet management server** (NSSMS) **204** is a device configured to provide a network slice subnet management function (Network Slice Subnet Management Function, NSSMF). Specifically, the NSSMS 204 is configured to deploy and manage an NSSI.

Specifically, the NSSMS 204 is configured to receive a performance requirement for an NSSI. The performance requirement for an NSSI may be specifically a slice profile (Slice Profile), or may be a KPI in the slice profile. The performance requirement for an NSSI is from a network slice subnet user 209. The network slice subnet user 209 is a user having a network slice subnet requirement, and is specifically a user who subscribes to a network slice subnet, network operation and maintenance personnel, or the like. In this case, the user 107 in FIG. 1 is specifically the network slice subnet user 209. It should be understood that authorized access of the NSSMS 204 may be provided for the network slice subnet user 209, so that the network slice subnet user 209 requests an NSSI from the NSSMS 204, and uses the obtained NSSI to deploy an NSI or a CSI of the network slice subnet user.

The performance requirement for an NSSI may alternatively be from the NSMS 203, and is specifically a performance requirement of an NSI for an NSSI. In this case, the NSMS 203 is configured to implement functions of the second management server 102. Correspondingly, the second network resource is an NSI.

When there is a sharable NSSI and there is an available NSSI, the NSMS 203 is configured to obtain an identifier of an allocated NSSI from existing NSSIs according to the performance requirement for an NSSI, where an available capability of the allocated NSSI meets the performance requirement. For specific content, refer to descriptions in other embodiments of this application. The first management server 101 needs to be replaced with the NSSMS 204, and the first network resource needs to be replaced with the NSSI. Details are not described herein again.

When there is no sharable NSSI or no available NSSI, the NSSMS 204 is configured to create a new NSSI. Specifically, the NSSMS 204 is configured to: convert the performance requirement for an NSSI into a performance requirement for a network function (NF), and send the performance requirement for an NF to a network function management server (Network Function Management Server, NFMS) 205 through an interface with the NFMS 205, to request the NFMS 205 to allocate an NF to deploy the NSSI.

The foregoing self-driving service is still used as an example. When the NSMS 203 requests an NSSI to deploy a new NSI, the NSSMS 204 determines that there is no available NSSI. In this case, the NSSMS 204 needs to create a new NSSI. A network slice subnet includes network elements, and functions (such as functional behavior and interfaces) provided by the network elements are collectively referred to as an NF. Correspondingly, the NSSI may be divided into a plurality of NFs. For example, the CN-NSSI includes a session management function (Session Management Function, SMF) used to provide a session management service, a user plane function (User Plane Function, UPF) used to provide a user plane service, and a driving control function used to provide self-driving control; and the RAN-NSSI includes a 5G next generation NodeB (next generation NodeB, gNB) used to provide a radio access service. Therefore, the NSSMS 204 needs to request to allocate an NF to the new NSSI. First, the performance requirement for an NSSI is converted into the performance requirement for an NF. For example, a performance requirement for a CN-NSSI is decomposed into performance requirements for an SMF, a UPF, and a driving control function, and a performance requirement for a RAN-NSSI is decomposed into performance requirements for a plurality of gNBs. Then, the NSSMS 204 requests the NFMS 205 to allocate the NF according to the performance requirement for an NF, to deploy the new NSSI.

**The network function management server** (NFMS) **205** is a device configured to provide a network function management function. Specifically, the NFMS 205 is configured to deploy and manage an NF, and is specifically deployed in an element management system (Element Management System, EMS), or is deployed in an independent physical device. The NF may be implemented by using special-purpose hardware, or may be a software instance running on special-purpose hardware, or may be an instantiated virtual function on a virtual platform (for example, a cloud platform), or the like.

Specifically, the NFMS 205 is configured to receive a performance requirement for an NF. The performance requirement for an NF is from a network function user 210. The network function user 210 is a user having a network function requirement, and is specifically a user who subscribes to a network function, network operation and maintenance personnel, or the like. In this case, the user 107 in FIG. 1 is specifically the network function user 210. It should be understood that authorized access of the NFMS 205 may be provided for the network function user 210, so that the network function user 210 requests an NF from the NFMS 205, and uses the obtained NF to deploy an NSI, an NSSI, or a CSI of the network function user.

The performance requirement for an NF may alternatively be from the NSSMS 204, and is specifically a performance requirement of an NSSI for an NF. In this case, the NSSMS 204 is configured to implement functions of the second management server 102. Correspondingly, the second network resource is an NSSI.

When there is a sharable NF and there is an available NF, the NSSMS 204 is configured to obtain an identifier of an allocated NF from existing NFs according to the performance requirement for an NF, where an available capability of the allocated NF meets the performance requirement. For specific content, refer to descriptions in other embodiments of this application. The first management server 101 needs to be replaced with the NFMS 205, and the first network resource needs to be replaced with the NF. Details are not described herein again.

When there is no sharable NF or no available NF, the NFMS 205 is configured to create a new NF. Specifically, the NFMS 205 selects an appropriate physical resource from a physical resource pool managed by the NFMS 205, to create the new NF.

**The resource information server 103** is configured to: store and manage resource information of one or more network resources, and provide a query for the resource information. The network resource herein includes at least one of the TI, the CSI, the NSI, the NSSI, and the NF described above. The resource information herein includes an available capability, load information, requirement information, planning information, alarm information, a correspondence between network resources, and/or the like. The resource information server 103 includes a resource information database 1031, a resource information query server 1032, and a resource information management server 1033.

In an implementation, the resource information database 1031 is separately deployed at different levels to store resource information of various network resources. For example, the resource information database 1031 is deployed at a communication service level to store resource information of the CSI, and the resource information database 1031 is deployed at a network slice level to store resource information of the NSI. Optionally, the resource information database 1031 at each level is deployed in a management server of a corresponding network resource, and therefore the management server of each network resource is further configured to store resource information of the network resource. In other words, resource information of the first network resource is stored in the first network management server 101. For example, the resource information of the CSI is stored in the CSMS 202, and the resource information of the NSI is stored in the NSMS 203.

Correspondingly, the resource information query server 1032 and the resource information management server 1033 may also be respectively deployed at different levels. In this case, the resource information server 103 at each level is deployed in a management server of a corresponding network resource. To be specific, the resource information server 103 of the first network resource is deployed in the first network management server 101. For example, a resource information server 103 at the communication service level is deployed in the CSMS 202, that is, the CSMS 202 further provides functions of storing, managing, and querying the resource information of the CSI; and a resource information server 103 at the network slice level is deployed in the NSMS 203, that is, the NSMS 203 further provides functions of storing, managing, and querying the resource information of the NSI.

Certainly, the resource information query server 1032 may still be deployed in a centralized manner, to uniformly provide a query for resource information of each network resource. This improves resource information query efficiency. Therefore, the centralized resource information query server 1032 is configured to access the resource information database 1031 at each level to obtain resource information of each required network resource. The resource information management server 1033 is similar. Details are not described again. In addition, the resource information query server 1032 and the resource information management server 1033 may be independently deployed or deployed together. This is not limited in this application.

In another implementation, the resource information database 1031 is deployed in a centralized manner to store resource information of each network resource. The resource information database 1031 interacts with the management server of each network resource by using the resource information management server 1033, to obtain latest resource information of each network resource. For example, after allocating an NSI, the NSMS 203 sends an update message that carries an identifier of the allocated NSI to the resource information management server 1033, so that the resource information management server 1033 updates an available capability of the allocated NSI that is stored in the resource information database 1031. For details, refer to descriptions in other embodiments of this application. Correspondingly, both the resource information query server 1032 and the resource information management server 1033 may be deployed in a centralized manner. Details are not described again.

1.1.1.1 The definition of the network resource model (NRM) facilitates management of the information about each network resource. When there is a sharable network resource, it is beneficial to extend the capability model in the NRM, so that an allocated network resource can be quickly determined based on available capabilities of network resources during resource allocation. The capability model extended in the NRM is used to define the available capability of the network resource. The capability model is referred to as an NRM capability profile. This name is used as an example for description in this application, and another name is not limited to representing the capability model of the network resource. Broadly, the planning information of the network resource (a total capability of the network resource, that is, a maximum capability of the network resource that is planned), the load information of the network resource (a used capability, that is, a capability of the network resource that has been occupied), and the available capability of the network resource (a capability of the network resource that can be further used for allocation) all may be referred to as capability information of the network resource. In this embodiment of this application, an example in which the capability model defines the available capability of the network resource is used for description. The capability model may further define the planning information of the network resource and the load information of the network resource. This is not limited in this application.

For example, parameters that may be included in the NRM capability profile are shown in Table 1.

**Table 1**

| Parameter name | Support Qualifier (Support Qualifier) | isReadable (isReadable) | isWritable (isWritable) | isInvariant (isInvariant) | isNotifyable (isNotifyable) |
|---|---|---|---|---|---|
| Identifier | M | T | F | T | T |
| Description | C | T | T | F | T |
| Capability property | M | T | T | F | T |

The identifier (Identifier, ID) is used to identify the available capability of the network resource. The description is used to add some description information of the available capability. The capability property is a set of available capabilities in each dimension, and is specifically an array type and is inherited by each subclass for extension. Support Qualifier is used to indicate whether the parameter is a parameter that needs to be supported, where M indicates that the parameter needs to be supported, and C indicates that the parameter is optional. isReadable is used to indicate whether the parameter is a readable parameter, where T indicates that the parameter is readable, and F indicates that the parameter is not readable. isWritable is used to indicate whether the parameter is a writable parameter, where T indicates that the parameter is writable, and F indicates that the parameter is not writable. isInvariant is used to indicate whether the parameter is an invariant parameter, where T indicates that the parameter is invariant, and F indicates that the parameter is variant. isNotifyable is used to indicate whether the parameter is a parameter that can be notified, where T indicates that the parameter can be notified, and F indicates that the parameter cannot be notified. It should be understood that features of the parameters Support Qualifier, isReadable, isWritable, isInvariant, and isNotifyable in Table 1 are examples, and may be set by persons skilled in the art as required. This is not limited in this application.

Therefore, each network resource can inherit the NRM capability profile to derive a capability model of the network resource. First, the NSI capability model (referred to as the NSI capability profile) is introduced. The NSI capability profile is used to define an available capability of the NSI, and specifically describes a capability of the NSI that can still be used for allocation when running of a CSI deployed above the NSI is not affected or a requirement of a user to which the NSI has been allocated for the NSI is met. The NSI capability profile may specifically include: (1) an NSI capability identifier that is used to identify the available capability of the NSI and that may be specifically an NSI ID or an ID corresponding to the NSI ID, where the NSI ID is used to identify the NSI; (2) an NSI description; and (3) an NSI capability property that may specifically include one or more of the following parameters:
a. a maximum quantity of user equipments that can be further supported by the NSI, which may be represented by NSIMaxNumberofUEsCap;
b. a maximum quantity of connections that can be further supported by the NSI, which may be represented by NSIMaxNumberofConnsCap;
c. uplink traffic that can be further supported by the NSI, which may be represented by NSIULThptCap;
d. downlink traffic that can be further supported by the NSI, which may be represented by NSIDLThptCap;
e. a minimum latency that can be further supported by the NSI, which may be represented by NSILatencyCap;
f. a coverage area that can be further supported by the NSI, which may be represented by NSICoverageAreaCap;
g. a maximum data packet that can be transmitted and that can be further supported by the NSI, which may be represented by NSIMaxPktSizeCap; and
h. a moving velocity of the user equipment that can be further supported by the NSI, which may be represented by NSIUEVelocityCap.

It should be understood that the NSI capability property may further include another parameter indicating an NSI capability. In addition, each parameter of the NSI capability property may alternatively be represented by using a parameter identifier. For example, "101" is used to represent a maximum quantity of user equipments that can be further supported by the NSI, and "102" is used to represent a maximum quantity of connections that can be further supported by the NSI.

A CSI capability model (referred to as a CSI capability profile) also inherits the NRM capability profile. The CSI capability profile is similar to the NSI capability profile. For details, refer to the descriptions of the NSI capability profile. Details are not described herein again.

An NSSI capability model (referred to as an NSSI capability profile) also inherits the NRM capability profile. The NSSI capability profile is similar to the NSI capability profile, and the NSI in the NSI capability profile needs to be replaced with the NSSI. Details are not described herein again.

An NF capability model (referred to as an NF capability profile) also inherits the NRM capability profile. The NF capability profile is also similar to the NSI capability profile. For details, refer to the descriptions of the NSI capability profile. Details are not described herein again. Optionally, an NF capability property further includes a parameter that describes an uplink/downlink data transmission capability. An uplink data transmission capability parameter is used as an example for description, and a downlink data transmission capability parameter is similar. For example, the NF capability property further includes the following parameters:
a. an uplink bandwidth guarantee that can be further supported by the NF, which may be represented by NFULGRBCap;
b. an uplink latency that can be further supported by the NF, which may be represented by NFULLatencyCap;
c. an uplink data transmission rate that can be further supported by the NF, which may be represented by NFULDataRateCap;
d. an uplink transmission interval that can be further supported by the NF, which may be represented by NFULTransIntervalCap;
e. uplink receive power that can be further supported by the NF, which may be represented by NFULRecPowerCap; and
f. an uplink signal-to-noise ratio that can be further supported by the NF, which may be represented by NFULSNRCap.

A value of each parameter in the available capability of the network resource is obtained through calculation. Specifically, **the MDAS 104** is configured to: calculate the available capability of the network resource, and provide the available capability of the network resource for the resource information server 103. For specific content, refer to descriptions in other embodiments of this application. The MDAS 104 is deployed in a centralized manner to provide the available capability of each network resource, or is separately deployed at different levels to provide the available capability of each network resource. For example, the MDAS 104 is deployed at the network slice level to provide the available capability of the NSI, and the MDAS 104 is deployed at the communication service level to provide the available capability of the CSI.

1.1.1.2 The load information of the network resource may be used to determine the available capability of the network resource. Therefore, the load model is extended in the NRM, to help determine the available capability of the network resource. The load model extended in the NRM is used to define the load information of the network resource. The load model is referred to as an NRM Perfload profile. This name is used as an example for description in this application, and another name is not limited to representing the load model of the network resource.

For example, parameters that may be included in the NRM Perfload profile are shown in Table 2.

**Table 2**

| Parameter name | Support Qualifier (Support Qualifier) | isReadable (isReadable) | isWritable (isWritable) | isInvariant (isInvariant) | isNotifyable (isNotifyable) |
|---|---|---|---|---|---|
| Identifier | M | T | F | T | T |
| Description | C | T | T | F | T |
| Load property | M | T | T | F | T |

The identifier (ID) is used to identify the load information of the network resource. It should be understood that, for a same network resource, an ID of the NRM Perfload profile may be the same as an ID of the NRM capability profile, to facilitate maintenance and query of information about the same network resource. For example, the ID of each of the two is the ID of the network resource. The description is used to add some description information of the load information. The load property is a set of load information in each dimension, and is specifically an array type and is inherited by each subclass for extension. The load property includes a load statistics property and/or a load expectation property. The load statistics property is a property parameter for collecting statistics about load of a network resource in a historical time range. The load expectation property is a property parameter for predicting load of a network resource in an expected time range. In addition, for explanations of Support Qualifier, isReadable, isWritable, isInvariant, and isNotifyable, refer to Table 1. Details are not described again.

Therefore, each network resource inherits the NRM Perfload profile to derive a load model of the network resource. First, the NSI load model (referred to as the NSI Perfload profile) is introduced. The NSI Perfload profile is used to define load information of the NSI, and may specifically include: (1) an NSI load identifier that is used to identify the load information of the NSI and that is specifically an NSI ID or an ID corresponding to the NSI ID; (2) an NSI description; and (3) an NSI load property that specifically includes one or more of the following parameters:
A. Load statistics property:
   a. statistics about usage of a central processing unit (Central Processing Unit, CPU) of the NSI, which may be represented by NSICPUUsageStaLoad;
   b. statistics about memory usage of the NSI, which may be represented by NSIMemoryUsageLoad;
   c. statistics about disk usage of the NSI, which may be represented by NSIDiskUsageLoad;
   d. statistics about a maximum quantity of user equipments of the NSI, which may be represented by NSIMaxNumberofUEsLoad;
   e. statistics about a maximum quantity of connections of the NSI, which may be represented by NSIMaxNumberofConnsLoad;
   f. statistics about uplink traffic of the NSI, which may be represented by NSIULThptLoad;
   g. statistics about downlink traffic of the NSI, which may be represented by NSIDLThptLoad;
   h. statistics about a minimum latency of the NSI, which may be represented by NSILatencyLoad;
   i. statistics about a coverage area of the NSI, which may be represented by NSICoverageAreaLoad;
   j. statistics about a maximum data packet transmitted by the NSI, which may be represented by NSIMaxPktSizeLoad; and
   k. statistics about a moving velocity of the user equipment of the NSI, which may be represented by NSIUE Velocity Load.
B. Load expectation property: A specific parameter is similar to that of the load statistics property, and statistics needs to be replaced with expectation. Details are not described herein again.

It should be understood that the NSI load property may further include another parameter indicating NSI load. This is not limited in this application. Optionally, the load statistics property further includes statistical time that is used to indicate the foregoing historical time range, and the load expectation property further includes expected time that is used to indicate the foregoing expected time range. In addition, each parameter of the NSI load property may alternatively be represented by using a parameter identifier.

A CSI load model (referred to as a CSI Perfload profile) also inherits the NRM Perfload profile. The CSI Perfload profile is similar to the NSI Perfload profile. For details, refer to the descriptions of the NSI Perfload profile. Details are not described herein again.

An NSSI load model (referred to as an NSSI Perfload profile) also inherits the NRM Perfload profile. The NSSI Perfload profile is similar to the NSI Perfload profile, and the NSI in the NSI Perfload profile needs to be replaced with the NSSI. Details are not described herein again.

An NF load model (referred to as an NF Perfload profile) may also inherit the NRM Perfload profile. The NF Perfload profile is also similar to the NSI Perfload profile. For details, refer to the descriptions of the NSI Perfload profile. Details are not described herein again. Optionally, an NF load property further includes a parameter that describes uplink/downlink data transmission load, for example, statistics about an uplink latency of the NF (which may be represented by NFULLatencyLoad). For details, refer to the parameter that describes the uplink/downlink data transmission capability in the NF capability model. The capability description needs to be replaced with the load description. Details are not described again.

**The NWDAS 105** is configured to provide the load information of the network resource for the resource information server 103. For specific content, refer to descriptions in other embodiments of this application. The NWDAS 105 may be deployed in a centralized manner to provide the load information of each network resource, or is separately deployed at different levels to provide the load information of each network resource. For example, the NWDAS 105 is deployed at the network slice level to provide NSI load information, and the NWDAS 105 is deployed at the communication service level to provide CSI load information.

In addition to the available capability and the load information described above, the requirement information, the planning information, the alarm information, and the correspondence may also be defined in the NRM. Details are not described in this application.

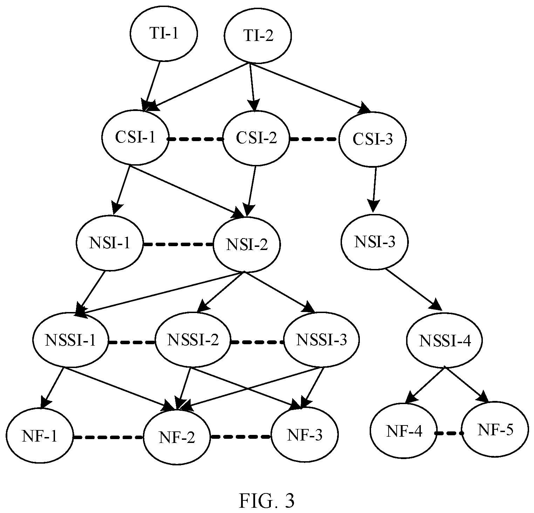

1.1.1.3 In the embodiment shown in FIG. 1, the resource information of the network resource may be stored in a topology form. FIG. 3 further provides a schematic diagram of a network resource topology with reference to a specific network resource, to more clearly display a correspondence between network resources.

To facilitate unified topology management, a topology node may be defined. For example, parameters for defining a topology node are shown in Table 3.

**Table 3**

| Parameter name | Support Qualifier (Support Qualifier) | isReadable (isReadable) | isWritable (isWritable) | isInvariant (isInvariant) | isNotifyable (isNotifyable) |
|---|---|---|---|---|---|
| Identifier | M | T | F | T | T |
| Label | C | T | T | F | T |
| Type | M | T | T | T | T |
| Property | M | T | T | F | T |

The identifier (ID) is used to identify a topology node, and is specifically an ID of a network resource of the topology node or an ID corresponding to the ID of the network resource, for example, TI-1, TI-2, CSI-1, or CSI-2 in FIG. 3. The label (Label) is used to add description information of the topology node, and may be defined by a creator of the topology node, for example, a purpose of creating the topology node and an alias of the topology node. The type (Type) is used to indicate a topology node type. For example, NSINode is used to indicate an NSI node. The property (Property) is used to indicate property information of the topology node. The property may specifically include various capability properties and/or load properties described above, and may further include a planning property (used to represent planning information), a requirement property (used to represent requirement information), an alarm property (used to represent alarm information), a relationship property (used to represent a correspondence between topology nodes), and the like. For specific parameters, refer to the foregoing descriptions. Details are not described herein again. Requirement information of a topology node may include information about a requirement of an upper-level topology node for the topology node and/or information about a requirement of the topology node for a lower-level topology node.

A circle shown in FIG. 3 is used to represent a topology node. The correspondence between topology nodes may be described by using a topology edge. In this application, an example in which the correspondence between topology nodes is described by using a topology edge is used for description. For example, parameters for defining a topology edge are shown in Table 4.

**Table 4**

| Parameter name | Support Qualifier (Support Qualifier) | isReadable (isReadable) | isWritable (isWritable) | isInvariant (isInvariant) | isNotifyable (isNotifyable) |
|---|---|---|---|---|---|
| Identifier | M | T | F | T | T |
| Label | C | T | T | F | T |
| Start node | M | T | T | F | T |
| Target node | M | T | T | F | T |
| Multiplicity | C | T | T | F | T |
| Property | M | T | T | F | T |

The identifier (ID) is used to identify a topology edge. The label (Label) is used to describe a correspondence between two nodes of a topology edge. For example, the CSI-1 node is deployed above an NSI-1 node, or a same CSI node (CSI-1) is deployed above the NSI-1 node and an NSI-2 node. The start node and the target node are respectively used to represent the two nodes of the topology edge, and "From" and "To" may be respectively used to represent the start node and the target node. For a directed edge (the directed edge is represented by a straight line with an arrow in FIG. 3), an upper-level node may be used as a start node, and a lower-level node may be used as a target node. In this case, a topology edge between the start node and the target node indicates that the start node is deployed above the target node. Conversely, a lower-level node may also be used as a start node, and an upper-level node may also be used as a target node. For an undirected edge (the undirected edge is represented by a dashed line in FIG. 3), the start node and the target node are randomly determined. The multiplicity (Multiplicity) is used to describe a feature of the correspondence between nodes of the topology edge, for example, may include: ManyToOne (used to represent a many-to-one correspondence); OneToMany (used to represent a one-to-many correspondence); OneToOne (used to represent a one-to-one correspondence); and ManyToMany (used to represent a many-to-many correspondence). The property (Property) is used to indicate property information of the topology edge, and is an array type and is inherited by each subclass for extension.

For example, the following describes one topology edge in FIG. 3.

```
 ID: CSIToNSIA
 From: CSI-1
 To: NSI-1
 Label: the edge between CSI-1 and NSI-1
 Multiplicity: OneToMany //indicate that CSI-1 is not deployed only above NSI-1.
 Properties:
 DeploymentDate: 20200412 //indicate deployment time.
 CreatedBy: TI-1 //indicate that the creator is TI-1.
```

It can be learned from the foregoing descriptions or FIG. 3 that the TI is deployed above the CSI, the CSI is deployed above the NSI, the NSI is deployed above the NSSI, and the NSSI is deployed above the NF. Actually, the NSI may alternatively be deployed above the NSSI and the NF, or even deployed above a nested NSI. This is not limited in this application. In addition, the network resource topology may describe resource information of one or more types of network resources. FIG. 3 describes resource information of five types of network resources as an example.

In the embodiment shown in FIG. 1, the resource scheduling server 106 is described in detail, and similar content is not described again. The following should be understood: (1) The resource scheduling server 106 may be separately deployed at different levels to perform resource scheduling on each network resource. Therefore, the management server of each network resource interacts with the corresponding resource scheduling server 106 to implement resource scheduling. In this case, the resource scheduling server 106 may be further separately deployed in the management server of each network resource, that is, the management server of each network resource is configured to provide a resource scheduling function. For example, the NSMS 203 is further configured to perform NSI resource scheduling based on a scheduling algorithm, and the CSMS 202 is further configured to perform CSI resource scheduling based on a scheduling algorithm. (2) The resource scheduling server 106 may alternatively be deployed in a centralized manner, so that the management server of each network resource interacts with the resource scheduling server that is deployed in a centralized manner.

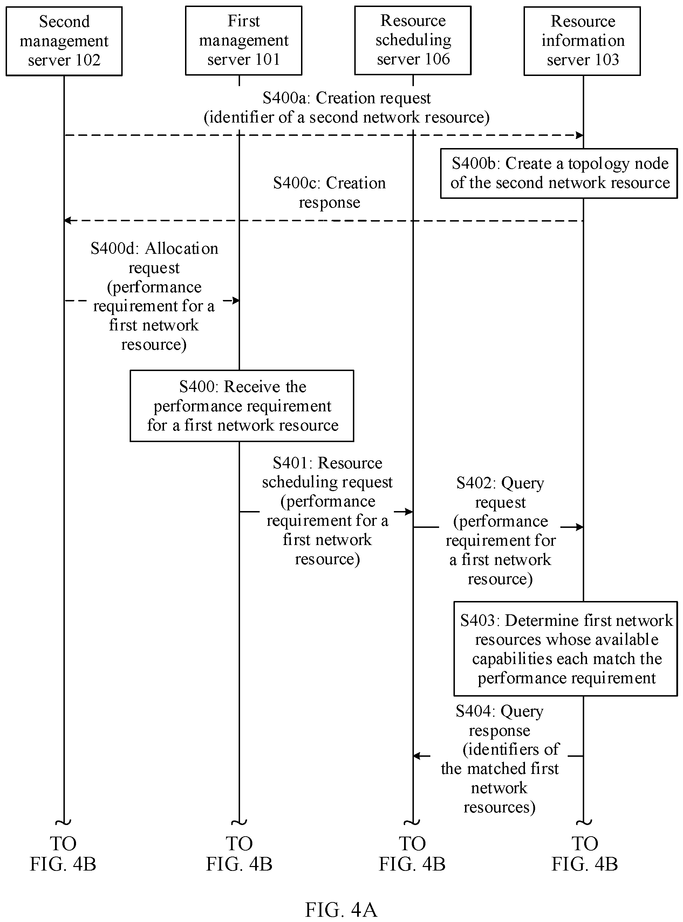

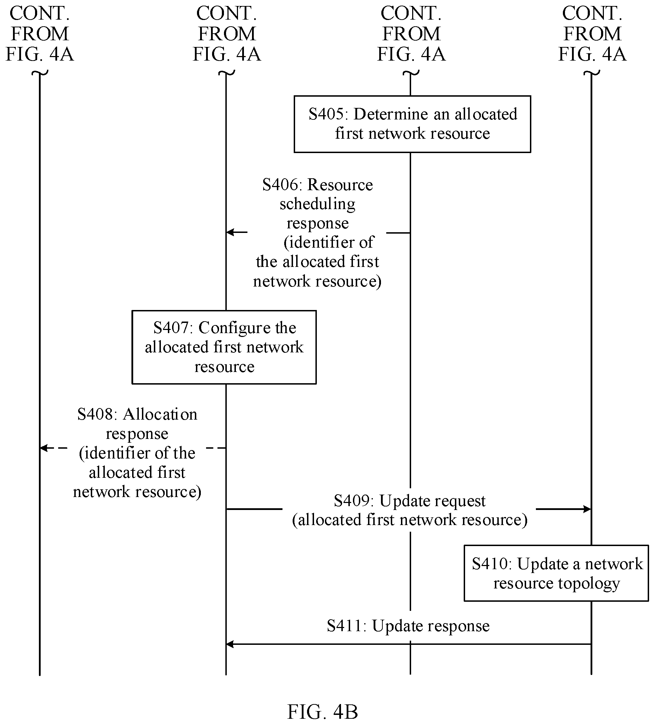

**FIG. 4**A and FIG. 4B **are a flowchart of a network resource management method according to an embodiment of this application. A procedure of the method is implemented based on the architecture shown in** **FIG. 1** **and/or** **FIG. 2****. In the method procedure, the resource information server 103 queries, based on available capabilities of existing first network resources, first network resources that each can meet a requirement, and then the resource scheduling server 106 selects, based on a scheduling algorithm, an allocated first network resource from the first network resources that each meet the requirement, so that the first management server 101 obtains the allocated first network resource, and further triggers the resource information server 103 to update an available capability of the allocated first network resource. The method procedure specifically includes the following steps.**

S400: The first management server 101 receives a performance requirement for a first network resource.

The performance requirement for a first network resource is used to request the first management server 101 to allocate a first network resource, and the allocation is specifically initial allocation or reallocation. The first network resource herein is specifically any one of a CSI, an NSI, an NSSI, or an NF.

Optionally, the performance requirement for a first network resource is from the user 107 (not shown in the figure). Specifically, the user 107 submits the performance requirement for a first network resource to the first management server 101 by using user equipment. Alternatively, the user 107 may negotiate with the first management server 101 by using user equipment, to determine the performance requirement for a first network resource. The following briefly describes a possible reallocation case:

If the user 107 has requested a first network resource from the first management server 101 before, and the first management server 101 has allocated a first network resource (referred to as an initial first network resource below) to the user 107, after a user requirement changes, the user 107 may send a changed performance requirement for a first network resource to the first management server 101, to request the first management server 101 to perform reallocation. It should be understood that, in this case, the user 107 may further send an identifier of the initial first network resource to the first management server 101, so that the first management server 101 determines the initial first network resource.

Alternatively, the initial first network resource allocated by the first management server 101 to the user 107 changes, for example, is faulty, deactivated, or scaled. In this case, the first management server 101 determines that a first network resource needs to be reallocated to the user 107. That the first management server 101 obtains a performance requirement for the initial first network resource is specifically obtaining the performance requirement from the user 107, the resource information server 103, or a local memory. Then, the first management server 101 performs a subsequent allocation step according to the performance requirement for the initial first network resource.

Optionally, the performance requirement for a first network resource is a performance requirement of a to-be-deployed second network resource for a first network resource, and is used to request to allocate the first network resource to the to-be-deployed second network resource. The following two cases are discussed: (1) initial allocation: creating a correspondence between the to-be-deployed second network resource and the first network resource; and (2) reallocation: updating the correspondence between the to-be-deployed second network resource and the first network resource. It should be understood that, when the first network resource is a CSI, the second network resource is a TI; when the first network resource is an NSI, the second network resource is a CSI; when the first network resource is an NSSI, the second network resource is an NSI; or when the first network resource is an NF, the second network resource is an NSSI. Actually, network resources of a same type may also be deployed in a nested manner. For example, the second network resource NSI is deployed above the first network resources NSI and NSSI. Alternatively, network resource may be deployed across levels. For example, the second network resource NSI is deployed above the first network resources NSSI and NF. This is not limited in this application.

In Case (1), the second management server 102 determines to deploy a new second network resource (that is, create a second network resource). It should be understood that, in this application, the new second network resource is referred to as the to-be-deployed second network resource, or may be referred to as a to-be-created second network resource. Specifically, after receiving an allocation request for the to-be-deployed second network resource, the second management server 102 determines, based on a case in which there is no available second network resource or no sharable second network resource, to deploy the new second network resource. Therefore, the second management server 102 requests the first management server 101 to create the correspondence between the second network resource and the first network resource. In this case, the second management server 102 may further request the resource information server 103 to create a topology node of the second network resource, which specifically includes the following steps:

S400a: The second management server 102 generates an identifier for the to-be-deployed second network resource, and sends a creation request to the resource information server 103, where the creation request carries the identifier of the to-be-deployed second network resource.

The creation request is used to request the resource information server 103 to create a topology node of the to-be-deployed second network resource. The creation request specifically includes an object of the to-be-deployed second network resource, and is used to create the topology node. The object is generated by the second management server 102, and the object includes the identifier of the to-be-deployed second network resource. It should be understood that the object may further include other information (for example, information about a requirement of the to-be-deployed second network resource for a first network resource). If storage is not performed in a topology form, it may be considered that the creation request is used to request the resource information server 103 to store information about the to-be-deployed second network resource. In this application, storage in a topology form is used as an example for description, but this is not limited. Other steps are similar. Details are not described again.

Specifically, the second management server 102 sends the creation request to the resource information management server 1033.

S400b: The resource information server 103 creates the topology node of the to-be-deployed second network resource.

An identifier of the topology node is specifically the identifier of the to-be-deployed second network resource or an identifier corresponding to the identifier of the to-be-deployed second network resource. A type is the second network resource. A property includes information in the object of the to-be-deployed second network resource (for example, the performance requirement of the to-be-deployed second network resource for the first network resource); or is temporarily vacant, and is supplemented after the to-be-deployed second network resource is successfully deployed.

Specifically, in response to the creation request, the resource information management server 1033 creates the topology node of the to-be-deployed second network resource in the resource information database 1031 based on the creation request.

S400c: The resource information server 103 returns a creation response to the second management server 102.

If the topology node of the to-be-deployed second network resource is successfully created, a creation success response is returned. If the identifier of the topology node is the identifier corresponding to the identifier of the to-be-deployed second network resource, the creation response further includes the identifier of the topology node, so that the second management server 102 subsequently maintains and queries the topology node.

If the creation fails, a creation failure response is returned, and the response may further carry a failure cause value.

It should be understood that S400a to S400c may alternatively be performed during or after S400d, that is, the second management server 102 creates the topology node of the to-be-deployed second network resource before, when, or after the second management server 102 requests the first management server 101 to allocate the first network resource. The sequence shown in FIG. 4A and FIG. 4B is merely an example, and does not limit the execution sequence of these steps.

S400d: The second management server 102 sends an allocation request to the first management server 101, where the allocation request carries the performance requirement of the second network resource for the first network resource.

The performance requirement of the second network resource for the first network resource is obtained by the second management server 102 through conversion (for example, conversion from a performance requirement for the second network resource to the performance requirement for the first network resource), or is obtained through negotiation between the second management server 102 and another device. The another device herein is specifically the first management server 101, the MDAS 104, and/or the like.

The allocation request further carries indication information for creating the correspondence between the second network resource and the first network resource, or the allocation request is specifically a request for creating the second network resource. Therefore, the first management server 101 determines, based on the allocation request, to create the correspondence between the second network resource and the first network resource.

Optionally, the allocation request further carries the identifier of the to-be-deployed second network resource, so that the first management server 101 determines the second network resource to which the first network resource is to be allocated.

In Case (2), when the second network resource has been created and deployed above the initial first network resource, redeployment of the second network resource is triggered due to some events, that is, the correspondence between the second network resource and the first network resource is updated. It should be understood that, in this application, the second network resource is also referred to as the to-be-deployed second network resource, or may be referred to as a to-be-redeployed second network resource. The following describes possible trigger events:
a. The performance requirement of the to-be-deployed second network resource for the first network resource changes. In this case, the second management server 102 sends an allocation request to the first management server 101. The allocation request carries a changed performance requirement of the to-be-deployed second network resource for the first network resource and the identifier of the to-be-deployed second network resource. The allocation request may further carry indication information for updating the correspondence between the second network resource and the first network resource, or the allocation request is specifically a request for updating the second network resource. Therefore, the first management server 101 determines, based on the allocation request, to update the correspondence between the second network resource and the first network resource.
b. The initial first network resource changes (for details, refer to the foregoing descriptions), another second network resource sharing the initial first network resource changes, or the like. Therefore, the first management server 101 determines to reallocate the first network resource to the second network resource (that is, the to-be-deployed second network resource) deployed above the initial first network resource. In this case, that the first management server 101 obtains the performance requirement of the to-be-deployed second network resource for the first network resource is specifically obtaining the performance requirement from the second management server 102, the resource information server 103, or a local memory

S401: The first management server 101 sends a resource scheduling request to the resource scheduling server 106, where the resource scheduling request carries the performance requirement for a first network resource.

The resource scheduling request is used to request the resource scheduling server 106 to select an appropriate first network resource as an allocated first network resource according to the performance requirement.

It should be understood that, if the performance requirement for a first network resource is a performance requirement for a non-sharable first network resource (for example, the allocation request in S400d further carries indication information indicating to request the non-sharable first network resource), S401 to S407 are not performed, and the first management server 101 creates a new first network resource according to the performance requirement for a first network resource, where the new first network resource is a non-sharable first network resource. Correspondingly, if the allocation request in S400d carries indication information indicating to request a sharable first network resource or does not carry the indication information indicating to request a non-sharable first network resource, the first management server 101 performs S401 to S407, to determine the allocated first network resource from the existing first network resources.

S402: The resource scheduling server 106 sends a query request to the resource information server 103, where the query request carries the performance requirement for a first network resource.

The query request is used to query first network resources whose available capabilities each meet the performance requirement (referred to as matched first network resources for short).

Specifically, the resource scheduling server 106 sends the query request to the resource information query server 1032.

S403: The resource information server 103 determines the matched first network resources.

The resource information server 103 determines, based on the available capabilities of the existing first network resources, the first network resources whose available capabilities each can meet the performance requirement, that is, the matched first network resources. Herein, "meet" means that the available capability is greater than or equal to the performance requirement.

It should be understood that the existing first network resources in this application are deployed first network resources, and are specifically deployed shareable first network resources.

In an optional manner, the resource information server 103 stores available capabilities of the deployed shareable first network resources, but does not store available capabilities of non-sharable first network resources. In this case, the resource information server 103 determines the matched first network resources based on the available capabilities of the existing first network resources and the performance requirement for a first network resource.

In another optional manner, the resource information server 103 stores available capabilities of the deployed shareable first network resources, and also stores available capabilities of deployed non-sharable first network resources. If the deployed non-sharable first network resources have not been allocated to the user or the second network resource, the available capabilities of the deployed non-sharable first network resources are planning information of the deployed non-sharable first network resources. If the deployed non-sharable first network resources have been allocated to the user or the second network resource, the deployed non-sharable first network resources each have no available capability or the available capabilities each are 0. In this case, the resource information server 103 may first determine the deployed shareable first network resources (for example, determine, based on share properties of the stored first network resources, whether the first network resources are shareable first network resources), and then determine the matched first network resources based on the available capabilities of the deployed shareable first network resources.

Specifically, the resource information query server 1032 searches, according to the performance requirement for a first network resource, information about the first network resources stored in the resource information database 1031 for the matched first network resources.

It should be understood that a plurality of first network resources may form a group of first network resources. Therefore, when an available capability of the group of first network resources can meet the performance requirement, the group of first network resources also belong to the matched first network resources. This is not limited in this application.

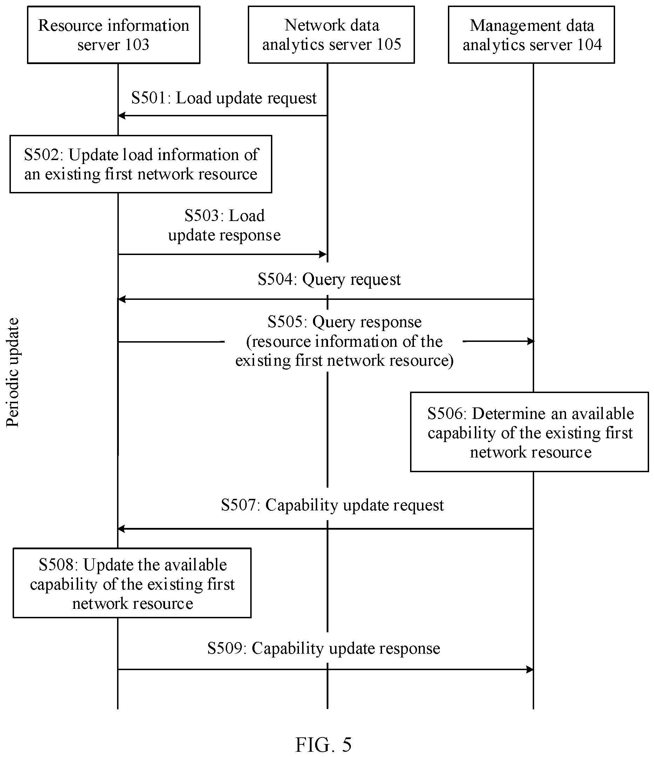

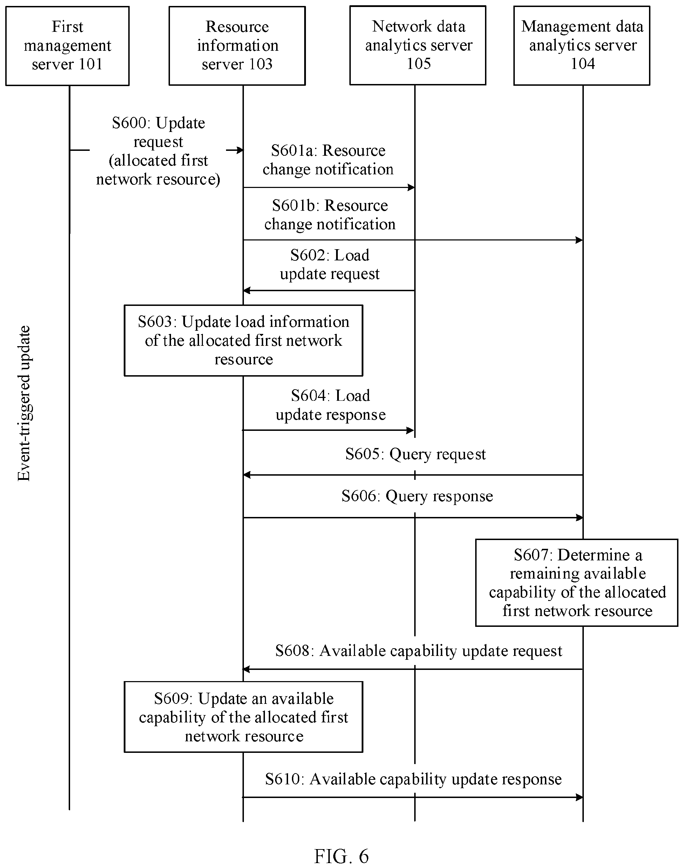

The available capabilities of the existing first network resources are determined and provided by the MDAS 104. For details, refer to the descriptions of embodiments shown in FIG. 5 and FIG. 6. Details are not described herein again.

For specific content of the available capability, refer to the NRM capability profile mentioned in the embodiment shown in FIG. 2 and the load model (such as the NSI capability profile or the NSSI capability profile) derived from each network resource. Details are not described herein again.

If the network resource information is stored in a topology form, the resource information server 103 traverses topology nodes whose types each are a first network resource, compares the performance requirement with a value of a corresponding capability property in the topology nodes, to select topology nodes whose capability property values each can meet the performance requirement, and determines identifiers of first network resources corresponding to these topology nodes (that is, identifiers of the matched first network resources).

It should be understood that the resource information server 103 may store the performance requirement for a first network resource. For example, in S400b, the topology node that is of the to-be-deployed second network resource and that is created by the resource information server 103 includes the performance requirement of the to-be-deployed second network resource for the first network resource. Alternatively, the to-be-deployed second network resource is originally deployed above the initial first network resource. In this case, the topology node of the to-be-deployed second network resource or a topology node of the initial first network resource stores the performance requirement of the to-be-deployed second network resource for the first network resource. In this case, the resource information server 103 can obtain the performance requirement for a first network resource, and the resource scheduling server 106 does not need to transfer the performance requirement for a first network resource. Therefore, the query request in S402 and the resource scheduling request in S401 may not carry the performance requirement, but carry only the identifier of the to-be-deployed second network resource. Certainly, the query request in S402 and the resource scheduling request in S401 may still carry the performance requirement. This improves query efficiency.

S404: The resource information server 103 sends a query response to the resource scheduling server 106, where the query response carries the identifiers of the matched first network resources.

The query response is specifically a query success response. It should be understood that the query response specifically carries identifiers of all first network resources in the matched first network resources, or carries identifiers of some first network resources in the matched first network resources, for example, the first N first network resources whose available capabilities rank first, where N is a positive integer, and N is a preset value stored in the resource information server 103, or is carried in the query request in S402.

In S403, if the resource information server 103 finds no first network resource whose available capability meets the performance requirement, that is, there is no matched first network resource, the resource information server returns a query failure response. The query failure response carries a failure cause value to indicate that there is no available first network resource. The query failure response and the query success response may be distinguished by using a message, or may be distinguished by using indication information carried in a message, or may be distinguished based on the fact indicating whether the identifiers of the matched first network resources are carried. The following resource scheduling response and allocation response are similar. Details are not described again.

Specifically, the resource information query server 1032 returns the query response to the resource scheduling server 106.

S405: The resource scheduling server 106 determines the allocated first network resource from the matched first network resources.

The allocated first network resource is one or more first network resources in the matched first network resources.

Optionally, the resource scheduling server 106 randomly determines the allocated first network resource. Alternatively, if the matched first network resource is exactly one first network resource or a group of first network resources, the matched first network resource is directly used as the allocated first network resource.

Optionally, the resource scheduling server 106 determines the allocated first network resource from the matched first network resources based on a scheduling algorithm. There are a plurality of scheduling algorithms, for example, a gang scheduling (Gang Scheduling) algorithm, a dominant resource fairness (Dominant Resource Fairness, DRF) algorithm, a bin packing (Bin Packing) algorithm, and a queuing algorithm. This is not limited in this application. When the resource scheduling server 106 configures a plurality of scheduling algorithms, algorithm weights may be further configured, to determine a final result (that is, the allocated first network resource) based on results of the plurality of scheduling algorithms and weights corresponding to the scheduling algorithms. The scheduling algorithm uses the available capabilities of the matched first network resources as an input, to output the allocated first network resource. Therefore, the query response in S404 further carries the available capabilities of the matched first network resources. Specifically, the resource scheduling server 106 determines the allocated first network resource from the matched first network resources based on the scheduling algorithm and the available capabilities of the matched first network resources. Certainly, the scheduling algorithm may alternatively use other information of the matched first network resources as an input, for example, load information or planning information. Therefore, the query response in S404 further carries the other information of the matched first network resources. The allocated first network resource is an optimal first network resource obtained based on the scheduling algorithm, so that overall network resource scheduling can be optimized, for example, network resource utilization can be increased.

S406: The resource scheduling server 106 sends a resource scheduling response to the first management server 101, where the resource scheduling response carries an identifier of the allocated first network resource.

The resource scheduling response is specifically a resource scheduling success response.

If the resource scheduling server 106 does not determine an appropriate first network resource as the allocated first network resource in S405, for example, the result obtained based on the scheduling algorithm is empty, the resource scheduling server returns a resource scheduling failure response. The resource scheduling failure response carries a failure cause value to indicate that there is no available first network resource. In addition, if the resource information server 103 returns the query failure response in S404, S405 is not performed, and the resource scheduling server 106 also returns the resource scheduling failure response in S406.

It should be understood that the resource scheduling server 106 and the resource information server 103 may be deployed together, or the resource information server 103 can provide functions of the resource scheduling server 106. In an implementation, the query request in S402 and the query response in S404 are not sent. In this case, in S401, the first management server 101 sends the resource scheduling request to the resource information server 103; in S403, after determining the matched first network resources, the resource information server 103 further performs an action performed by the resource scheduling server 106 in S405, that is, further determines the allocated first network resource from the matched first network resources; and in S406, the resource information server 103 returns the resource scheduling response to the first management server 101. In another implementation, communication between the resource scheduling server 106 and the resource information server 103 in S402 and S404 is communication between different function modules inside the resource information server 103. For example, the query request and the query response are messages for communication between a module configured to provide a resource information query function and a module configured to provide a resource scheduling function in the resource information server 103. Specifically, the resource scheduling server 106 and the resource information query server 1032 may be deployed together, and specific content is not described again.

The resource scheduling server 106 and the first management server 101 may alternatively be deployed together, or the first management server 101 can provide functions of the resource scheduling server 106. In an implementation, the resource scheduling request in S401 and the resource scheduling response in S406 are not sent. In this case, in S402, the first management server 101 sends the query request to the resource information server 103; in S403, the resource information server 103 determines the matched first network resources; in S404, the resource information server 103 sends the query response to the first management server 101; and in S405, the first management server 101 determines the allocated first network resource from the matched first network resources. In another implementation, communication between the first management server 101 and the resource scheduling server 106 in S401 and S406 is communication between different function modules inside the first management server 101. For example, the resource scheduling request and the resource scheduling response are messages for communication between a module configured to provide deployment and management functions of the first network resource and a module configured to provide a resource scheduling function in the first management server 101.

The resource scheduling server 106 and the MDAS 104 may alternatively be deployed together, or the MDAS 104 can provide functions of the resource scheduling server 106. In this case, the resource scheduling server 106 in this embodiment of this application may be replaced with the MDAS 104.

The functions of the resource scheduling server 106 may be deployed in the MDAS 104 and the first management server 101. In an implementation, in S401, the first management server 101 sends the performance requirement for a first network resource to the MDAS 104. The MDAS 104 obtains the matched first network resources according to the performance requirement for a first network resource. For example, the MDAS 104 performs an action performed by the resource scheduling server 106 in S402: In S402, the MDAS 104 sends the query request to the resource information server 103, where the query request carries the performance requirement for a first network resource; and in S404, the resource information server 103 sends the query response to the MDAS 104, where the query response carries the identifiers of the matched first network resources. For another example, S402 is not performed. The MDAS 104 performs an action performed by the resource information server 103 in S403. Specifically, the MDAS 104 performs an action performed by the resource information query server 1032 in S403. Further, the MDAS 104 or the first management server 101 determines the allocated first network resource from the matched first network resources. For example, the MDAS 104 returns information such as the identifiers of the matched first network resources to the first management server 101. The first management server 101 performs an action performed by the resource scheduling server 106 in S405: In S405, the first management server 101 determines the allocated first network resource; and S406 is not performed. For another example, the MDAS 104 performs actions performed by the resource scheduling server 106 in S405 and S406: In S405, the MDAS 104 determines the allocated first network resource; and in S406, the MDAS 104 returns information such as the identifier of the allocated first network resource to the first management server 101.

S407: The first management server 101 configures the allocated first network resource.

The first management server 101 receives the resource scheduling response, to determine to use the allocated first network resource. The allocated first network resource is a first network resource that is finally allocated to meet the performance requirement. In other words, the first management server 101 determines to allocate the allocated first network resource carried in the resource scheduling response to the user 107 or the to-be-deployed second network resource. Specifically, the first management server 101 modifies a configuration of the allocated first network resource, so that the allocated first network resource is used by the user 107 or the to-be-deployed second network resource.

In S400, if the performance requirement for a first network resource is from the user 107, the first management server 101 further returns an allocation success response (not shown in the figure) to the user 107 by using user equipment, where the response carries the identifier of the allocated first network resource. If the allocation of the first network resource is reallocation, the response may further carry the identifier of the initial first network resource that is originally allocated to the user 107 (before the allocation of the first network resource), so that the user 107 is clearer about the reallocation of the first network resource. In addition, the first management server 101 further modifies a configuration of the initial first network resource, so that the initial first network resource is not used by the user 107. Certainly, the foregoing case is a description of successful allocation (for example, the resource scheduling success response is returned in S406). If the allocation fails, for example, if the resource scheduling failure response is returned in S406, the first management server 101 creates a new first network resource, or the first management server 101 returns an allocation failure message to the user 107 to determine, based on selection of the user 107, whether to create a new first network resource.

In S400, if the performance requirement for a first network resource is the performance requirement of the to-be-deployed second network resource for the first network resource, the first management server 101 notifies the second management server 102 of the identifier of the allocated first network resource allocated to the to-be-deployed second network resource.

S408: The first management server 101 returns an allocation response to the second management server 102, where the allocation response carries the identifier of the allocated first network resource. The allocation response is specifically an allocation success response. The allocation success response may further carry the identifier of the to-be-deployed second network resource, to indicate a correspondence between the to-be-deployed second network resource and the allocated first network resource, so that the second management server 102 establishes the correspondence between the to-be-deployed second network resource and the allocated first network resource. It should be understood that, in this case, the to-be-deployed second network resource has been deployed above the allocated first network resource, and is also referred to as the to-be-deployed second network resource for consistency with the foregoing description. Herein, "to-be-deployed" is used to distinguish between second network resources, and a deployment status is not limited.

If the allocation of the first network resource is reallocation, the allocation response may further carry the identifier of the initial first network resource on which the to-be-deployed second network resource is originally deployed, so that the second management server 102 deletes a correspondence between the to-be-deployed second network resource and the initial first network resource. In addition, the first management server 101 further modifies a configuration of the initial first network resource, so that the initial first network resource is not used by the to-be-deployed second network resource.

Certainly, the foregoing case is a description of successful allocation. If the allocation fails, the allocation failure response is returned to the second management server 102. Alternatively, the first management server 101 further creates a new first network resource for the to-be-deployed second network resource, and notifies the second management server 102 after the creation succeeds. If no new first network resource is created after the allocation fails or creation of a new first network resource also fails, the second management server 102 further sends a deletion request to the resource information server 103, where the deletion request carries the identifier of the to-be-deployed second network resource or the identifier of the topology node of the to-be-deployed second network resource, so that the resource information server 103 deletes the topology node of the to-be-deployed second network resource.

It should be understood that a sequence of performing S400b to S400c is optional. For example, after S408, that is, after determining that the to-be-deployed second network resource is successfully created, the second management server 102 creates the topology node of the to-be-deployed second network resource.

Optionally, the first management server 101 and/or the second management server 102 establish/establishes the correspondence between the to-be-deployed second network resource and the allocated first network resource, to facilitate subsequent resource management.

After the allocation of the first network resource, resource information of the allocated first network resource changes, for example, the available capability or the correspondence. Further, the first management server 101 triggers the resource information server 103 to update a network resource topology, for example, update the available capability of the allocated first network resource and/or establish the correspondence between the allocated first network resource and the to-be-deployed second network resource. The details are as follows:
S409: The first management server 101 sends an update request to the resource information server 103, where the update request carries the identifier of the allocated first network resource.

Specifically, the update request indicates to update the resource information of the allocated first network resource, for example, load information, the available capability, and the correspondence. The resource information server 103 determines, based on the update request, that the resource information of the allocated first network resource changes, to update the resource information of the allocated first network resource.

If the allocated first network resource is allocated to the user 107, the update request further carries an identifier of the user 107, so that the resource information server 103 establishes a correspondence between the user 107 and the allocated first network resource (for example, stores the correspondence in a topology node of the allocated first network resource, or establishes a topology edge between the user 107 and the allocated first network resource). In a reallocation case, the update request may further carry an identifier of an initial first network resource of the user 107, to trigger the resource information server 103 to update an available capability of the initial first network resource. In addition, because the resource information server 103 may store a correspondence between the user 107 and the initial first network resource, even if the update request does not carry the identifier of the initial first network resource, the resource information server 103 can still determine the initial first network resource, to update the available capability of the initial first network resource. The resource information server 103 further deletes the correspondence between the user 107 and the initial first network resource.

If the allocated first network resource is allocated to the to-be-deployed second network resource, the update request further carries the identifier of the to-be-deployed second network resource, so that the resource information server 103 establishes the correspondence between the to-be-deployed second network resource and the allocated first network resource (for example, stores the correspondence in a topology node of the allocated first network resource, or establishes a topology edge between the to-be-deployed second network resource and the allocated first network resource). In a reallocation case, the update request may further carry an identifier of an initial first network resource of the to-be-deployed second network resource, to trigger the resource information server 103 to update an available capability of the initial first network resource. In addition, because the resource information server 103 may store a correspondence between the to-be-deployed second network resource and the initial first network resource, even if the update request does not carry the identifier of the initial first network resource, the resource information server 103 can still determine the initial first network resource of the to-be-deployed second network resource, to update the available capability of the initial first network resource. The resource information server 103 further deletes the correspondence between the to-be-deployed second network resource and the initial first network resource.

The update request is further used to trigger the resource information server 103 to update the available capability of the allocated first network resource. For a specific update step of the resource information server 103, refer to the descriptions of the embodiment shown in FIG. 6. Details are not described herein again.

It should be understood that, after the resource information server 103 receives the update message, a sequence of updating the available capability (topology property) and establishing the correspondence (topology edge) is not limited.

Specifically, the first management server 101 sends the update message to the resource information management server 1033, and the resource information management server 1033 updates the resource topology stored in the resource information database 1031. Specific content is not described again.

S410: The resource information server 103 updates the network resource topology.

For details, refer to S409. Details are not described again.

S411: The resource information server 103 returns an update response to the first management server 101.

It should be noted that a sequence of the steps in this embodiment of this application is an example and is not limited. For example, S408 may be performed before, when, or after S407. S409 to S411 are similar. In addition, a message name in this embodiment of this application is an example and is not limited. For example, the allocation request in S400d may also be referred to as a creation request; the resource scheduling request in S401 may also be referred to as an allocation request or a resource mapping request; the query request in S402 may also be referred to as an available capability matching request, an available capability query request, or a KPI query request; and the update request in S409 may also be referred to as a topology update request, a resource mapping update request, or an available capability update request. The response message is also similar. Details are not described again.

It should be understood that the resource information database 1031 (configured to store resource information of a first network resource) at a first network resource level may be deployed together with the first management server 101, or the first management server 101 is configured to store resource information of a first network resource. Correspondingly, the resource information database 1031 (configured to store resource information of a second network resource) at a second network resource level may be deployed together with the second management server 102. In this case, in S400b, the resource information management server 1033 generates the topology node of the to-be-deployed second network resource in the second management server 102 based on the creation request. In S403, the resource information query server 1032 searches the information about the first network resources stored in the first management server 101 for the matched first network resources. In S409 and S410, the resource information management server 1033 updates the resource topology stored in the first management server 101. For specific content, refer to the foregoing descriptions. Details are not described again.

The resource information server 103 (configured to store, manage, and query resource information of a first network resource) at a first network resource level may be deployed together with the first management server 101. Correspondingly, the resource information server 103 (configured to store, manage, and query resource information of a second network resource) at a second network resource level may be deployed together with the second management server 102. (1) In an implementation, the creation request in S400a may not be sent, S400b may be performed by the second management server 102, and S400c may not be performed. The update request in S409 and the update response in S411 may not be sent. The resource information server 103 in S402, S403, S404, S409, and S410 is replaced with the first management server 101. For specific content, refer to the foregoing descriptions. Details are not described again. (2) In another implementation, communication between the first management server 101 and the resource information server 103 in S409 and S411 is communication between different function modules inside the first management server 101. For example, the update request and the update response are messages for communication between a module configured to provide a resource information management function and a module configured to provide a management function of the first network resource in the first management server 101. (3) In still another implementation, the creation request in S400a may not be sent, S400b may be performed by the second management server 102, and S400c may not be performed. Before S401 is performed, the first management server 101 performs the step of determining the matched first network resources based on the available capabilities of the existing first network resources in S403, and then sends the resource scheduling request to the resource scheduling server 106. The resource scheduling request carries resource information such as the identifiers and the available capabilities of the matched first network resources. In this case, S402 and S404 are not performed. For the resource scheduling request, refer to the descriptions of the query response in S404. The query response in S405 is replaced with the resource scheduling request. In addition, the update request in S409 and the update response in S411 may not be sent, and the resource information server 103 in S409 and S410 is replaced with the first management server 101. For specific content, refer to the foregoing descriptions. Details are not described again.

The resource information server 103 at a first network resource level, the first management server 101, and the resource scheduling server 106 may be deployed together. Correspondingly, the resource information server 103 at a second network resource level and the second management server 102 may be deployed together. (1) In an implementation, the creation request in S400a may not be sent, S400b may be performed by the second management server 102, and S400c may not be performed. Neither of the messages in S401, S402, S404, S406, S409, and S411 may be sent. In addition, both the resource scheduling server 106 and the resource information server 103 in the foregoing embodiment may be replaced with the first management server 101. For specific content, refer to the foregoing descriptions. Details are not described again. (2) In another implementation, communication between the first management server 101, the resource scheduling server 106, and the resource information server 103 in the foregoing embodiment is communication between different function modules inside the first management server 101.

In the network resource management method corresponding to FIG. 4A and FIG. 4B, the performance requirement is matched with an available capability to obtain the first network resource that can be allocated in the existing first network resources, and the available capability of the allocated first network resource is updated in time after the allocation of the first network resource. Therefore, when there is a sharable first network resource, the first network resource can be accurately and efficiently allocated based on an available capability. This improves feasibility and efficiency of network resource management.

**FIG.** 5 is a flowchart of a **method** for managing **an** available capability of a network resource according to **an embodiment** of this application. A procedure of **the method** is **implemented** based **on the architecture shown in** **FIG. 1** **and/or** **FIG. 2****. The method procedure describes** a **manner of periodically updating and maintaining an** available capability **in the** resource **information** server **103. Periodic update** of **an** available capability of a network resource helps improve effectiveness of **the** available capability of **the** network resource. **The method** procedure specifically **includes the** following steps.

S501: The NWDAS 105 sends a load update request to the resource information server 103, where the load update request carries load information of an existing first network resource.

The NWDAS 105 periodically calculates the load information of the existing first network resource, and updates the load information to the resource information server 103. For specific content of the load information, refer to the NRM Perfload profile mentioned in the embodiment shown in FIG. 2 and the load model (such as the NSI Perfload profile or the NSSI Perfload profile) derived from each network resource. Details are not described herein again.

The NWDAS 105 sends load information of all existing first network resources or load information of some existing first network resources (for example, load information of an existing first network resource that changes after comparison with a result of previous calculation) to the resource information server 103. In other words, the load update request may carry the load information of all or some of the existing first network resources.

Specifically, the NWDAS 105 sends the load update request to the resource information management server 1033.

S502: The resource information server 103 updates the load information of the existing first network resource.

Specifically, after receiving the load update request, the resource information server 103 updates, based on the load information that is of the existing first network resource and that is carried in the load update request, load information that is of an existing first network resource and that is stored in the resource information database 1031.

In an optional manner, the resource information server 103 may also periodically and actively request the load information of the existing first network resource from the NWDAS 105. In this case, the resource information server 103 periodically sends a load information request to the NWDAS 105. The load information request carries an identifier of the existing first network resource (which may also be identifiers of all or some of the existing first network resources herein). After receiving the load information request, the NWDAS 105 determines load information of the corresponding existing first network resource based on the identifier that is of the existing first network resource and that is carried in the load information request, and returns the load information of the existing first network resource to the resource information server 103 by using a load information response. Then, the resource information server 103 updates the load information of the existing first network resource. For specific content, refer to the foregoing descriptions. Details are not described again.

S503: The resource information server 103 returns a load update response to the NWDAS 105.

It should be understood that, if the resource information database 1031 stores no network resource load information, steps S501 to S503 are not performed, and steps such as the step in which the resource information server 103 periodically and actively requests the load information of the existing first network resource from the NWDAS 105 are not performed either.

S504: The MDAS 104 sends a query request to the resource information server 103.

The MDAS 104 periodically sends the query request to the resource information server 103 to obtain resource information of the existing first network resource.

Optionally, the query request carries an identifier of a to-be-queried existing first network resource, to indicate the to-be-queried existing first network resource. Alternatively, the query request carries no identifier. In this case, the query request indicates to query all existing first network resources stored in the resource information server 103.

Optionally, the query request further carries a property parameter of to-be-queried resource information, to indicate the to-be-queried resource information. Alternatively, the query request carries no property parameter. In this case, the query request indicates to query all resource information of the existing first network resources stored in the resource information server 103 (that is, all property information of topology nodes of the existing first network resources and/or all topology edge information of the existing first network resources). The resource information of the existing first network resource includes one or more of the following: planning information of the existing first network resource, load information of the existing first network resource, information about a requirement for the existing first network resource (including a performance requirement of a second network resource deployed above the existing first network resource and/or a performance requirement of a user sharing the existing first network resource), an available capability of the existing first network resource that is determined last time, alarm information of the existing first network resource, and a correspondence between the existing first network resource and another network resource.

The correspondence between the existing first network resource and the another network resource includes one or more of the following: a correspondence between the existing first network resource and a first network resource on which a same second network resource is deployed as the existing first network resource, a correspondence between the existing first network resource and a second network resource (also referred to as an upper-level network resource of the existing first network resource) deployed above the existing first network resource, a correspondence between the existing first network resource and the user sharing the existing first network resource, a correspondence between the existing first network resource and a third network resource (also referred to as a lower-level network resource of the existing first network resource) on which the existing first network resource is deployed, and the like. It should be understood that the query request may carry the identifier of the to-be-queried existing first network resource and the property parameter of the to-be-queried resource information, to indicate the to-be-queried resource information of the existing first network resource. Specific content is the same as that described above. Details are not described again.

Optionally, the query request further carries a query depth to indicate to query resource information of a quantity of levels of network resources corresponding to the existing first network resource. For example, when the query depth is 1, it indicates to query resource information of an upper-level network resource of the existing first network resource, the existing first network resource, and a lower-level network resource of the existing first network resource. When the query depth is 0, it indicates to query the resource information of the existing first network resource. Alternatively, the query request carries no query depth. In this case, the query request indicates, by default, to query the resource information of the existing first network resource. The query request may further carry a query depth direction to indicate to query the upper-level network resource and/or the lower-level network resource of the existing first network resource.

Specifically, the MDAS 104 sends the query request to the resource information query server 1032.

S505: The resource information server 103 sends a query response to the MDAS 104, where the query response carries the resource information of the existing first network resource.

The resource information server 103 returns the corresponding resource information to the MDAS 104 based on the query request.

Specifically, the resource information query server 1032 queries the resource information database 1031 for the corresponding resource information based on the query request, and sends the resource information to the MDAS 104.

S506: The MDAS 104 determines an available capability of the existing first network resource.

The MDAS 104 determines the available capability of the existing first network resource based on the resource information of the existing first network resource.

Specifically, the available capability of the existing first network resource is determined based on the resource information of the existing first network resource. For specific content, refer to S504. It should be understood that, if some information is not stored in the resource information server 103, the MDAS 104 may further obtain required information from another device. For example, when the load information of the existing first network resource is not stored in the resource information server 103, the MDAS 104 further obtains the load information of the existing first network resource from the NWDAS 105; or when the alarm information of the existing first network resource is not stored in the resource information server 103, the MDAS 104 further obtains the alarm information of the existing first network resource from an alarm information base.

There are a plurality of methods for determining the available capability of the existing first network resource. This is not limited in this application. The following describes a possible method: The MDAS 104 subtracts a value of a corresponding property in the performance requirement for the existing first network resource from a value of each property in the planning information of the existing first network resource, to obtain a difference, and then adjusts the difference based on the alarm information of the existing first network resource and the load information of the existing first network resource. For example, in some cases, if the value of the property in the performance requirement is far greater than a value of a corresponding property in the load information during actual running, some resources may be properly released as the available capability. However, if an alarm is generated due to a device fault, the difference cannot be used as the available capability. It is beneficial to adjust the difference based on the alarm information and the load information. The available capability obtained after the adjustment is closer to an actual available capability of the existing first network resource. This facilitates effective resource allocation and normal running of an allocated resource. Certainly, the MDAS 104 may not refer to the alarm information and/or the load information. It should be understood that the subtraction operation described above is an example operation. Actually, when an operation is performed on the planning information of the existing first network resource and the performance requirement of the existing first network resource, an operation method may be further selected based on a specific property.

In another possible method, the MDAS 104 subtracts a value of a corresponding property in the load information of the existing first network resource from a value of each property in the planning information of the existing first network resource, to obtain a difference, and then adjusts the difference based on the alarm information of the existing first network resource and the performance requirement for the existing first network resource. Similarly, the MDAS 104 may not refer to the alarm information and/or the performance requirement.

The MDAS 104 may further determine the available capability of the existing first network resource based on resource information of a network resource corresponding to the existing first network resource, for example, the resource information of the upper-level network resource of the existing first network resource and/or the lower-level network resource of the existing first network resource.

In a possible method, the MDAS 104 determines the available capability of the existing first network resource based on the resource information of the lower-level network resource (a third network resource) of the existing first network resource, for example, adds available capabilities of a plurality of third network resources of the existing first network resource. This is not limited in this application.

It should be understood that, for specific content of the available capability, refer to the NRM capability profile mentioned in the embodiment shown in FIG. 2 and the capability model (such as the NSI capability profile or the NSSI capability profile) derived from each network resource. Details are not described herein again.

S507: The MDAS 104 sends a capability update request to the resource information server 103, where the capability update request carries the available capability of the existing first network resource.

The MDAS 104 sends available capabilities of all existing first network resources that are determined in S506 or available capabilities of some existing first network resources (for example, an available capability of an existing first network resource that changes after comparison with a result of previous determining) to the resource information server 103.

Specifically, the MDAS 104 sends the capability update request to the resource information management server 1033.

S508: The resource information server 103 updates the available capability of the existing first network resource.

Specifically, the resource information management server 1033 updates the available capability of the existing first network resource stored in the resource information database 1031.

S509: The resource information server 103 returns a capability update response to the MDAS 104.

It should be understood that, when the available capability of the existing first network resource is determined based on the load information of the existing first network resource, S502 is performed before S505, so that updated load information can be used when the available capability of the existing first network resource is determined. This ensures that a determining result of the available capability is more accurate. Certainly, in some cases (for example, when the available capability of the existing first network resource does not need to be determined based on the load information, or an update period of the load information is shorter than an update period of the available capability), a sequence of performing the steps is not limited. In addition, after S502 is performed, the resource information server 103 may send a load change notification (for example, broadcast or unicast the load change notification to the MDAS 104), to trigger to perform S504 to S509. In this case, it may also be considered that the update of the available capability is triggered by an event. This is not limited in this application.

In an optional manner, the resource information server 103 may also periodically and actively request the available capability of the existing first network resource from the MDAS 104. The resource information server 103 periodically sends an available capability request to the MDAS 104. The available capability request carries the identifier of the existing first network resource and/or the resource information of the existing first network resource. The MDAS 104 determines the available capability of the existing first network resource, and returns the available capability of the existing first network resource to the resource information server 103 by using an available capability response. Then, the resource information server 103 updates the available capability of the existing first network resource. For specific content (for example, content included in the resource information of the existing first network resource and a manner of determining the available capability of the existing first network resource), refer to the foregoing descriptions. Details are not described herein again.

It should be noted that a message name in this embodiment of this application is an example and is not limited. For example, the load update request in S501 may also be referred to as a topology update request, the query request in S504 may also be referred to as a topology query request, and the capability update request in S507 may also be referred to as a topology update request or an available capability update request. The response message is also similar. Details are not described again.

It should be understood that the resource information database 1031 (configured to store resource information of a first network resource) at a first network resource level may be deployed together with the first management server 101. In this case, the resource information database 1031 in the embodiment shown in FIG. 5 needs to be replaced with the first management server 101. Specific content is not described again. In an optional manner, the resource information server 103 (configured to store, manage, and query resource information of a first network resource) at a first network resource level may be deployed together with the first management server 101. In this case, the resource information server 103 in the embodiment shown in FIG. 5 is replaced with the first management server 101. Specific content is not described again.

**FIG. 6** **is a flowchart of another method for managing an available capability of a network resource according to an embodiment of this application. A procedure of the method is implemented based on the architecture shown in** **FIG. 1** **and/or** **FIG. 2****. The method procedure describes** a **manner of updating and maintaining an available capability in the resource information server 103 under event trigger.**

Event-triggered update is also important for maintaining an available capability of a network resource, so that the available capability can be updated in time. There may be many update trigger events, for example, a change (a fault, deactivation, scaling, or the like) of the network resource, or a change (for example, initial network resource allocation or reallocation) of a network resource correspondence. After the update trigger event occurs, resource information of some network resources in the resource information server 103 changes accordingly. For example, if a first network resource is scaled out, the first management server 101 updates, to the resource information server 103, planning information obtained after the first network resource is scaled out. For example, if a first network resource is allocated to a second resource network, the first management server 101 updates a correspondence between the first network resource and the second resource network to the resource information server 103. Then, the resource information server 103 sends a resource change notification, to trigger the MDAS 104 to re-determine an available capability of a network resource whose resource information changes. The following uses the event of allocating a first network resource in the embodiment shown in FIG. 4A and FIG. 4B as an example to describe the event-triggered update of an available capability. The method procedure specifically includes the following steps.

S600: The first management server 101 sends an update request to the resource information server 103, where the update request carries an identifier of an allocated first network resource.

If the allocated first network resource is allocated to the user 107, the update request further carries an identifier of the user 107, so that the resource information server 103 establishes a correspondence between the user 107 and the allocated first network resource. If the allocated first network resource is allocated to a to-be-deployed second network resource, the update request further carries an identifier of the to-be-deployed second network resource, so that the resource information server 103 establishes a correspondence between the to-be-deployed second network resource and the allocated first network resource. For specific content, refer to S409. Details are not described herein again.

The resource information server 103 further returns an update response (not shown in the figure) to the first management server 101. It should be understood that the update response may be returned after the resource information server 103 receives the update request, or returned after the correspondence is established, or returned after S610.

The correspondence with the allocated first network resource changes, and an available capability of the allocated first network resource also changes. Therefore, the update request is further used to trigger the resource information server 103 to update a remaining available capability of the allocated first network resource that exists after the allocation of the first network resource.

It should be understood that, if the user 107 or the to-be-deployed second network resource originally corresponds to an initial first network resource, the resource information server 103 further needs to delete a correspondence between the user 107 and the initial first network resource or a correspondence between the to-be-deployed second network resource and the initial first network resource. In addition, the resource information server 103 further updates an available capability of the initial first network resource that exists after the allocation of the first network resource. A method for updating the available capability of the initial first network resource is similar to a method for updating the available capability of the allocated first network resource. Details are not described in this embodiment of this application.

S601: The resource information server 103 broadcasts a resource change notification.

The resource change notification carries the identifier of the allocated first network resource, to indicate that resource information of the allocated first network resource changes. Optionally, the resource change notification further carries indication information indicating changed resource information of the allocated first network resource, for example, indication information indicating that the correspondence between the allocated first network resource and the user 107 has been established, or indication information indicating that the correspondence between the allocated first network resource and the to-be-deployed second network resource has been established. The resource change notification is further used to indicate to re-determine the resource information of the allocated first network resource, for example, indicate to re-determine load information and/or the available capability of the allocated first network resource. The NWDAS 105 and the MDAS 104 receive the resource change notification.

It should be understood that the resource information server 103 may alternatively separately send the resource change notification to the NWDAS 105 and the MDAS 104 in a unicast manner. Therefore, in an optional manner, the resource change notification sent to the NWDAS 105 further indicates the NWDAS 105 to re-determine the load information of the allocated first network resource, and the resource change notification sent to the MDAS 104 further indicates the MDAS 104 to re-determine the available capability of the allocated first network resource.

Specifically, the resource information management server 1033 sends the resource change notification.

S602: The NWDAS 105 sends a load update request to the resource information server 103, where the load update request carries load information of the allocated first network resource that exists after the allocation of the first network resource.

The NWDAS 105 receives the resource change notification. The resource change notification indicates that the resource information of the allocated first network resource changes, and/or indicates the NWDAS 105 to re-determine the load information of the allocated first network resource. Therefore, the NWDAS 105 determines the load information of the allocated first network resource that exists after the allocation of the first network resource. It should be understood that the load information of the allocated first network resource that exists after the allocation of the first network resource is specifically load information that exists after the allocated first network resource is used by the user 107 or the to-be-deployed second network resource. The to-be-deployed second network resource is used as an example for description. The allocated first network resource is used by the to-be-deployed second network resource after the allocation of the first network resource, that is, the to-be-deployed second network resource is deployed above the allocated first network resource. Therefore, the load information of the allocated first network resource changes due to deployment of the to-be-deployed second network resource. In this case, the load information of the allocated first network resource that exists after the allocation of the first network resource is specifically load information of the allocated first network resource that exists after the to-be-deployed second network resource is deployed above the allocated first network resource. In this application, explanations provided after the allocation of the first network resource are similar. Details are not described again.

S603: The resource information server 103 updates the load information of the allocated first network resource.

Specifically, the resource information management server 1033 updates load information of the allocated first network resource that is originally stored in the resource information database 1031 to the load information of the allocated first network resource that exists after the allocation of the first network resource.

S604: The resource information server 103 returns a load update response to the NWDAS 105.

In an optional manner, the resource information server 103 may also actively request the load information of the allocated first network resource that exists after the allocation of the first network resource from the NWDAS 105 after S600. In this case, the resource information server 103 sends a load information request to the NWDAS 105. The load information request carries the identifier of the allocated first network resource. The NWDAS 105 determines the load information of the allocated first network resource that exists after the allocation of the first network resource, and returns the load information to the resource information server 103 by using a load information response. Then, the resource information server 103 updates the load information of the allocated first network resource that exists after the allocation of the first network resource.

It should be understood that, if the resource information database 1031 stores no network resource load information, steps S601a and S602 to S604 are not performed, and steps such as the step in which the resource information server 103 actively requests the load information of the allocated first network resource that exists after the allocation of the first network resource from the NWDAS 105 are not performed either.

S605: The MDAS 104 sends a query request to the resource information server 103.

The MDAS 104 receives the resource change notification in S601b. The resource change notification indicates that the resource information of the allocated first network resource changes, and/or indicates the MDAS 104 to re-determine the available capability of the allocated first network resource. Therefore, the MDAS 104 determines the remaining available capability of the allocated first network resource that exists after the allocation of the first network resource.

Before determining the remaining available capability, the MDAS 104 sends the query request to the resource information server 103 to obtain the resource information of the allocated first network resource. For specific content, refer to S504 in the embodiment shown in FIG. 5. The existing first network resource needs to be replaced with the allocated first network resource. Details are not described again.

S606: The resource information server 103 sends a query response to the MDAS 104, where the query response carries the resource information of the allocated first network resource.

For specific content, refer to S505 in the embodiment shown in FIG. 5. The existing first network resource needs to be replaced with the allocated first network resource. Details are not described again.

The resource information of the allocated first network resource is specifically resource information that has been updated after the allocation of the first network resource. For example, a performance requirement for the allocated first network resource includes a performance requirement that is related to the allocation of the first network resource and that is for a first network resource (that is, the performance requirement for a first network resource in S400). The load information of the allocated first network resource is the load information of the allocated first network resource that exists after the allocation of the first network resource. A correspondence between the allocated first network resource and a second network resource deployed above the allocated first network resource includes a correspondence between the allocated first network resource and the to-be-deployed second network resource that exists in the allocation of the first network resource (that is, the correspondence that is between the to-be-deployed second network resource and the allocated first network resource and that is established in S600 or S410). A correspondence between the allocated first network resource and a user sharing the allocated first network resource includes a correspondence between the allocated first network resource and the user 107 in the allocation of the first network resource (that is, the correspondence that is between the user 107 and the allocated first network resource and that is established in S600 or S410). Although the available capability of the allocated first network resource changes, the resource information server 103 has not obtained an updated result. Therefore, the available capability in the resource information of the allocated first network resource is still an available capability determined before the allocation of the first network resource.

It should be understood that, if the resource information server 103 sends the resource change notification in a broadcast manner in S601, a sequence of performing S602 and S605 is not determined, to be specific, S602 is performed before or after S605, or S602 and S605 are simultaneously performed. When the remaining available capability is determined based on the load information, S606 is performed after S603. If the resource information server 103 separately sends the resource change notification in a unicast manner in S601, this is similar to the foregoing description. Alternatively, the resource information server 103 may first send the resource change notification to the NWDAS 105, and then send the resource change notification to the MDAS 104 after S603.

S607: The MDAS 104 determines the remaining available capability of the allocated first network resource that exists after the allocation of the first network resource.

For similar content, refer to S506. The existing first network resource needs to be replaced with the allocated first network resource. Details are not described again. In addition, the resource information of the allocated first network resource is specifically resource information updated after the allocation of the first network resource. For specific content, refer to S606.

S608: The MDAS 104 sends a capability update request to the resource information server 103, where the capability update request carries the remaining available capability of the allocated first network resource that exists after the allocation of the first network resource. The capability update request further carries the identifier of the allocated first network resource.

Specifically, the MDAS 104 sends the capability update request to the resource information management server 1033.

S609: The resource information server 103 updates the remaining available capability of the allocated first network resource that exists after the allocation of the first network resource.

Specifically, the resource information management server 1033 updates an available capability (determined before the allocation of the first network resource) of the allocated first network resource that is originally stored in the resource information database 1031 to the remaining available capability that exists after the allocation of the first network resource.

S610: The resource information server 103 returns a capability update response to the NWDAS 105.

In an optional manner, the resource information server 103 may also actively request the remaining available capability of the allocated first network resource that exists after the allocation of the first network resource from the MDAS 104 after S600. The resource information server 103 sends an available capability request to the MDAS 104, where the available capability request carries the identifier of the allocated first network resource and/or the resource information of the allocated first network resource, to indicate the MDAS 104 to re-determine the available capability of the allocated first network resource. The MDAS 104 determines the remaining available capability of the allocated first network resource that exists after the allocation of the first network resource, and returns the remaining available capability of the allocated first network resource to the resource information server 103 by using an available capability response. Then, the resource information server 103 updates the remaining available capability of the allocated first network resource. For specific content, refer to the foregoing descriptions. Details are not described again.

In an optional manner, when resource information of a network resource changes, a management device of the network resource may also send a resource change notification, to trigger the MDAS 104 to re-determine an available capability of a network resource whose resource information changes. For example, in the foregoing embodiment, S600 and S601 are not performed, and instead, the first management server 101 broadcasts the resource change notification. For specific content, a function, and the like of the resource change notification, refer to the descriptions of the resource change notification in S601. In addition, for specific content of S602 to S610, refer to the foregoing descriptions. Details are not described again.

It should be noted that a message name in this embodiment of this application is an example and is not limited. For specific content, refer to the descriptions of the embodiment shown in FIG. 5. Details are not described again.

It should be understood that the resource information database 1031 (configured to store resource information of a first network resource) at a first network resource level may be deployed together with the first management server 101. In this case, the resource information database 1031 in the embodiment shown in FIG. 6 needs to be replaced with the first management server 101. Specific content is not described again. In an optional manner, the resource information server 103 (configured to store, manage, and query resource information of a first network resource) at a first network resource level may be deployed together with the first management server 101. In this case, the update request in S600 may be not sent, and the resource information server 103 in the embodiment shown in FIG. 6 is replaced with the first management server 101. Specific content is not described again.

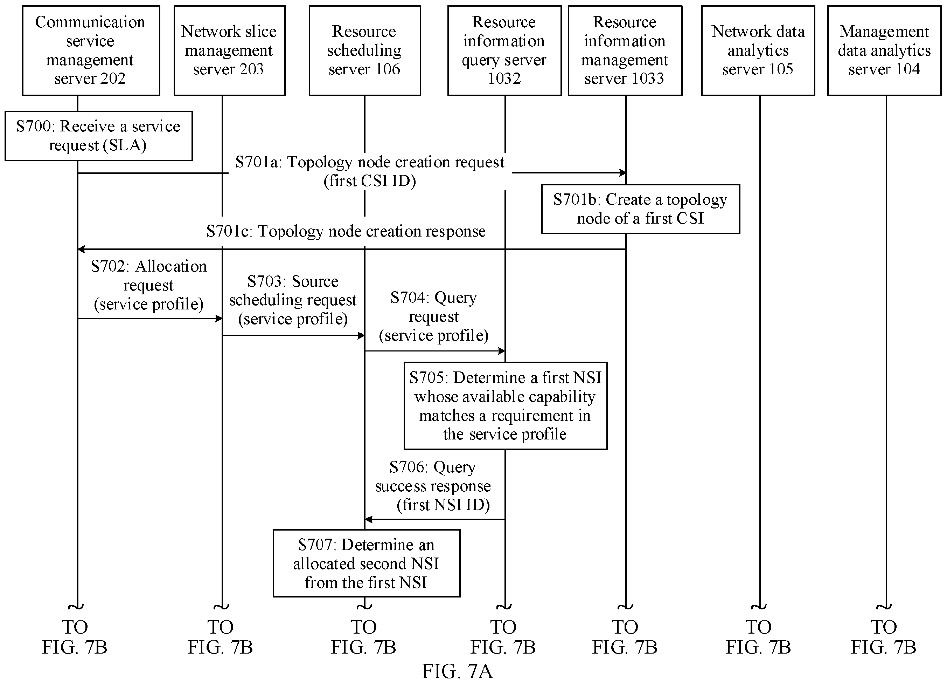

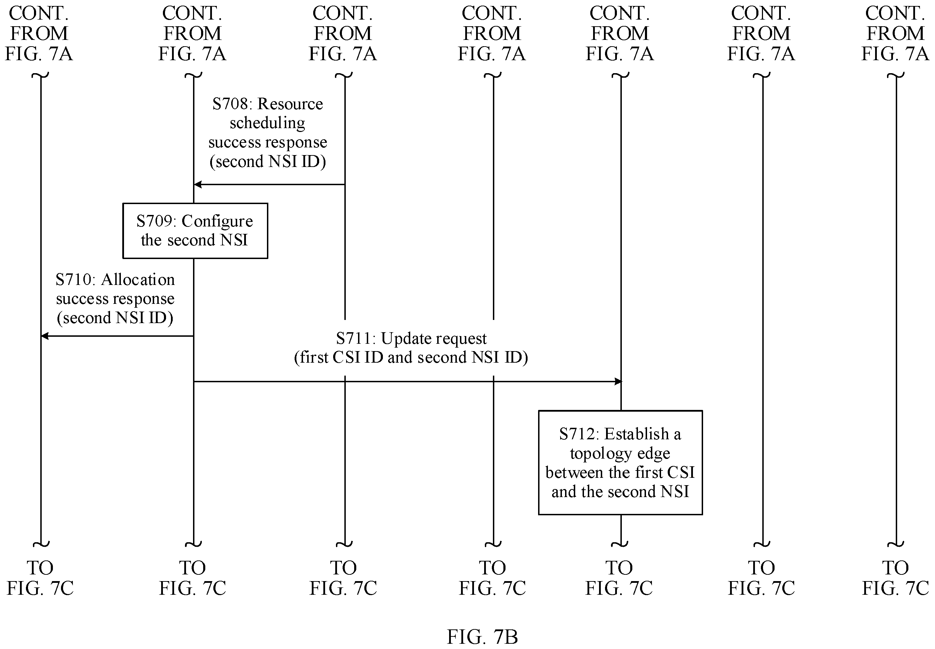

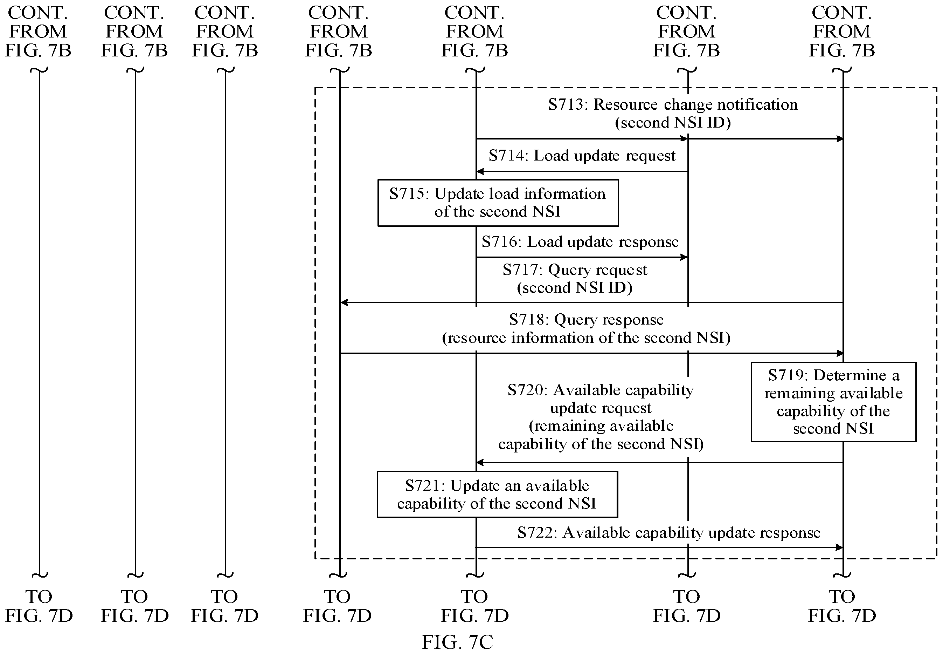

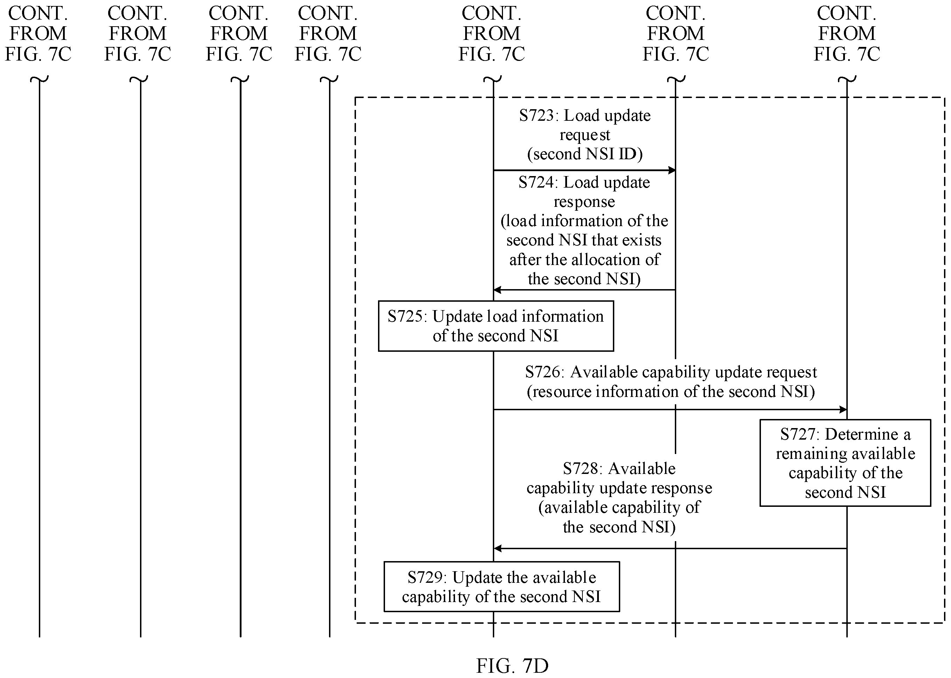

**To make the solutions in embodiments of this application clearer, as shown in** **FIG.** 7A to FIG. 7D, **a network resource management method provided in this application is specifically described by using an example in which a first management server 101 is an NSMS 203, a first network resource is an NSI, a second management server 102 is a CSMS 202, and a second network resource is a CSI. The method includes the following steps.**

S700: The CSMS 202 receives a service request from a communication service user 207, and negotiates an SLA with the communication service user 207.

The communication service user 207 logs in to a BSS by using user equipment, to negotiate the SLA with the CSMS 202. The SLA includes a performance requirement for a CSI, and may further include user information of the communication service user 207, and the like.

When there is no sharable CSI or no available CSI, the CSMS 202 determines to create a new CSI to serve the communication service user 207. The new CSI is also referred to as a to-be-created CSI or a to-be-deployed CSI. For brevity of description, the new CSI is referred to as a first CSI below.

The CSMS 202 creates an object of the first CSI, which includes generating an identifier for the first CSI, that is, a first CSI ID. The object of the first CSI includes information related to the first CSI, such as the first CSI ID or the SLA.

Then, the CSMS 202 requests an NSI from the NSMS 203 to deploy the first CSI, that is, creates a correspondence between a CSI and an NSI. The CSMS 202 further requests a resource information server 103 to create a topology node of the first CSI. The following first describes creation of the topology node of the first CSI.

S701a: The CSMS 202 sends a topology node creation request to a resource information management server 1033, where the topology node creation request carries the first CSI ID.

Specifically, the topology node creation request carries the object of the first CSI, and the object of the first CSI carries the first CSI ID.

S701b: The resource information management server 1033 creates the topology node of the first CSI.

Specifically, in response to the topology node creation request, the resource information management server 1033 creates the topology node of the first CSI in a resource information database 1031.

An identifier of the topology node is specifically the identifier of the first CSI or an identifier corresponding to the identifier of the first CSI. A type of the topology node is a CSI. A property of the topology node includes information in the object of the first CSI (for example, an SLA of the first CSI and a performance requirement of the first CSI for an NSI).

In an optional manner, after the first CSI is successfully deployed, the CSMS 202 requests the resource information management server 1033 to create the topology node of the first CSI. In other words, S701a to S701c are performed after S710.

S701c: The resource information management server 1033 returns a topology node creation response to the CSMS 202.

It should be understood that, when a CSI-level resource information database 1031 is deployed in the CSMS 202, the CSMS 202 can create the topology node of the first CSI, and S701a to S701c do not need to be performed. Certainly, to improve resource information query and management efficiency, the CSMS 202 may still create the topology node of the first CSI by using the resource information management server 1033. Because the resource information management server 1033 can create an index for each level of network resource, it is convenient to query and maintain resource information of each level of network resource in a unified manner subsequently.

The following describes creation of the correspondence between a CSI and an NSI.

The CSMS 202 obtains a corresponding service profile (including a performance requirement for an NSI) based on the SLA of the first CSI (including the performance requirement for a CSI). Specifically, the CSMS 202 converts the SLA of the first CSI into the corresponding service profile, or performs the foregoing conversion by using another device (for example, an MDAS 104 or the NSMS 203).

S702: The CSMS 202 sends an allocation request to the NSMS 203, where the allocation request carries the service profile.

Optionally, the allocation request further carries the first CSI ID, and/or indication information indicating to create the correspondence between a CSI and an NSI.

After receiving the allocation request, the NSMS 203 needs to allocate an NSI to the first CSI. When an independent resource scheduling server 106 is deployed to perform resource scheduling, the NSMS 203 requests the resource scheduling server 106 to allocate an NSI. In this case, S703 is performed.

S703: The NSMS 203 sends a resource scheduling request to the resource scheduling server 106, where the resource scheduling request carries the service profile.

The resource scheduling request is used to request the resource scheduling server 106 to select an appropriate NSI from existing NSIs to deploy the first CSI. Optionally, the resource scheduling request further carries the first CSI ID, and/or indication information indicating to create the correspondence between a CSI and an NSI.

S704: The resource scheduling server 106 sends a query request to a resource information query server 1032, where the query request carries the service profile.

Optionally, the resource scheduling server 106 determines a KPI (that is, determines a key performance requirement) from the service profile, and performs query by using the KPI (that is, the query request carries the KPI). This can improve query efficiency. It should be understood that both the service profile and the KPI indicate the performance requirement of the first CSI for the NSI.

The query request is used to query an NSI (referred to as a matched NSI) whose available capability meets the performance requirement of the first CSI for the NSI. For brevity of description, the matched NSI is referred to as a first NSI below.

S705: The resource information query server 1032 determines the first NSI whose available capability meets the requirement in the service profile.

The resource information database 1031 stores available capabilities of the existing NSIs, and the available capabilities are obtained from the MDAS. The MDAS periodically recalculates the available capabilities of the existing NSIs, and provides the resource information database 1031 with the calculated available capabilities of the existing NSIs by using the resource information query server 1032. In addition, when resource information of an NSI in the existing NSIs changes, the MDAS recalculates an available capability of the changed NSI, and similarly provides the resource information database 1031 with the calculated available capability of the changed NSI by using the resource information query server 1032. For specific content, refer to embodiments shown in FIG. 5 and FIG. 6.

The resource information query server 1032 determines the first NSI based on the available capabilities of the existing NSIs. The following provides descriptions by using an example. The service profile includes the following requirement parameters:
a. maxNumberofUEs (maximum quantity of user equipments): 1000;
b. Latency (minimum latency): 1 ms; and
c. Coverage Area (coverage area): cell A.

In this case, the resource information query server 1032 queries the available capabilities of the existing NSIs stored in the resource information database 1031, to determine the first NSI that meets the foregoing requirement. It is assumed that the available capabilities of the existing NSIs are as follows:
(1) NSI-1: NSIMaxNumberofUEsCap: 1000; NSILatencyCap: 2 ms; CoverageArea: cell B.
(2) NSI-2: NSIMaxNumberofUEsCap: 1500; NSILatencyCap: 0.8 ms; CoverageArea: cell A + cell B.
(3) NSI-3: NSIMaxNumberofUEsCap: 500; NSILatencyCap: 0.5 ms; CoverageArea: cell A.
(4) NSI-4: NSIMaxNumberofUEsCap: 3000; NSILatencyCap: 0.5 ms; CoverageArea: cell A.
(5) NSI-5: NSIMaxNumberofUEsCap: 2000; NSILatencyCap: 1 ms; CoverageArea: cell A.

In this case, the first NSI determined by the resource information query server 1032 includes the NSI-2, the NSI-4, and the NSI-5.

S706: The resource information query server 1032 returns a query success response to the resource scheduling server 106, where the query success response carries a first NSI ID.

The query success response may further carry the available capability of the first NSI.

If no NSI that can meet the requirement is found in S705, a query failure response is returned.

S707: The resource scheduling server 106 determines an allocated second NSI from the first NSI.

For ease of description, the allocated NSI herein is referred to as a second NSI. The second NSI is one NSI or a group of NSIs in the first NSI.

The resource scheduling server 106 determines the allocated second NSI from the first NSI based on a scheduling algorithm and the available capability of the first NSI. For example, the resource information query server 1032 determines that an optimal NSI in the first NSI is the NSI-4 (the second NSI).

When the resource scheduling server 106 runs a plurality of scheduling algorithms, a plurality of results may be obtained. For example, an optimal NSI determined based on a DRF algorithm is the NSI-2, and an optimal NSI determined based on a bin packing algorithm is the NSI-4. In this case, the resource scheduling server 106 further determines a final result based on an algorithm weight, to determine the second NSI.

S708: The resource scheduling server 106 returns a resource scheduling success response to the NSMS 203, where the resource scheduling success response carries a second NSI ID.

If no appropriate NSI can be used as the second NSI (for example, the query failure response is returned in S706 or a scheduling algorithm running result in S707 is empty), the resource scheduling server 106 returns a resource scheduling failure response.

S709: The NSMS 203 configures the second NSI.

The NSMS 203 receives the resource scheduling success response, and allocates the second NSI to the first CSI. Specifically, the NSMS 203 modifies the second NSI (for example, delivers a configuration parameter), so that the first CSI is deployed above the second NSI.

If the resource scheduling failure response is received, it indicates that there is no available existing NSI, and the NSMS 203 creates a new NSI.

S710: The NSMS 203 sends an allocation success response to the CSMS 202, where the allocation success response carries the second NSI ID.

The allocation success response may further carry the first CSI ID. The CSMS 202 determines, based on the allocation success response, that the first CSI has been successfully deployed and is deployed above the second NSI.

Further, the CSMS 202 sends a service allocation success response message to the communication service user 207.

It should be noted that, if the NSMS 203 creates a new NSI in S709, the allocation success response carries an ID of the new NSI. If the new NSI fails to be created, the NSMS 203 returns an allocation failure response message to the CSMS 202, and the CSMS 202 sends a service allocation failure response message to the communication service user 207, to refuse to serve the communication service user 207. In addition, the CSMS 202 further sends a deletion request to the resource information management server 1033, where the deletion request carries the first CSI ID, so that the resource information management server 1033 deletes the topology node of the first CSI.

S711: The NSMS 203 sends an update request to the resource information management server 1033, where the update request carries the first CSI ID and the second NSI ID.

If the first CSI is deployed above the second NSI, a correspondence between the first CSI and the second NSI is established, and an available capability of the second NSI also changes. Therefore, the NSMS 203 sends the update request to the resource information server 103. This helps update a resource topology in time.

The update request is used to trigger update of a topology edge, and is also used to trigger update of property information (for example, an available capability) of a topology node.

S712: The resource information management server 1033 establishes a topology edge between the first CSI ID and the second NSI.

After receiving the update request, the resource information management server 1033 establishes the correspondence (topology edge) between the first CSI and the second NSI in the resource information database 1031, or stores the correspondence as property information (a relationship property) of the topology node of the first CSI and/or the second NSI in a corresponding node.

The resource information management server further updates property information of a topology node, for example, load information and the available capability of the first CSI, and/or load information and the available capability of the second NSI. The update method includes: 1. The resource information management server broadcasts a resource change notification, to trigger the NWDAS 105 to determine load information and request to update the load information, and trigger the MDAS 104 to determine an available capability and request to update the available capability. 2. The resource information management server actively requests load information from the NWDAS 105, and actively requests an available capability from the MDAF 104. The information update of the first CSI is similar to the information update of the second NSI. The following specifically describes two possible methods by using the information update of the second NSI as an example.

### Method 1:

S713: The resource information management server 1033 broadcasts a resource change notification.

The resource change notification carries the second NSI ID, to indicate that the resource information of the second NSI changes. Optionally, the resource change notification further carries indication information indicating to establish a correspondence between the first CSI ID and the second NSI ID.

The NWDAS 105 and the MDAS 104 receive the resource change notification. It should be understood that broadcast is an optional form, and unicast is also feasible.

S714: The NWDAS 105 sends a load update request to the resource information management server 1033, where the load update request carries load information of the second NSI ID that exists after the allocation of the second NSI.

After receiving the resource change notification, the NWDAS 105 performs calculation to determine the load information of the second NSI ID that exists after the allocation of the second NSI. The allocation of the second NSI means that the second NSI is allocated to the first CSI this time, or the first CSI is deployed above the second NSI this time.

S715: The resource information management server 1033 updates load information of the second NSI ID.

The resource information management server 1033 updates load information of the second NSI ID that is originally stored in the resource information database 1031 to the load information of the second NSI ID that exists after the allocation of the second NSI.

S716: The resource information management server 1033 returns a load update response to the NWDAS 105.

S717: The MDAS 104 sends a query request to the resource information query server 1032, where the query request carries the second NSI ID.

The MDAS 104 receives the resource change notification in S713, and determines, based on the resource change notification, that the resource information of the second NSI changes. Therefore, the MDAS 104 determines a remaining available capability of the second NSI that exists after the allocation of the second NSI. The remaining available capability is determined based on the resource information of the second NSI, and the resource information database 1031 stores the resource information of the second NSI. Therefore, the MDAS 104 sends the query request to request the resource information of the second NSI. It can be learned that the resource information database 1031 stores resource information of network resources, which not only helps quickly and effectively determine an available existing NSI based on available capabilities in the resource information database during resource allocation, but also helps accurately determine an available capability of the existing NSI based on other information (such as planning information, load information, and requirement information) in the resource information database.

Optionally, the query request further carries a property parameter of to-be-queried resource information, to indicate to-be-queried resource information of the second NSI. The query request further carries a query depth to indicate to query resource information of a quantity of levels of network resources corresponding to the second NSI. For example, when the query depth is 1, it indicates to query resource information of the CSI deployed above the second NSI, the second NSI, and an NSSI on which the second NSI is deployed. For details, refer to the descriptions of S504 and S605. Details are not described again.

S718: The resource information query server 1032 returns a query response to the MDAS 104, where the query response carries the resource information of the second NSI.

The resource information query server 1032 queries the resource information database 1031 for the corresponding resource information based on the query request, and sends the resource information to the MDAS 104. For example, the resource information of the second NSI includes one or more of the following: planning information of the second NSI, load information of the second NSI, requirement information of the second NSI, an available capability of the second NSI that is determined last time, alarm information of the second NSI, and a correspondence between the second NSI and another network resource.

The resource information of the second NSI that is carried in the query response is used to determine a remaining available capability of the second NSI that exists after the allocation of the second NSI. Therefore, if information other than the available capability in the resource information of the second NSI changes after the allocation of the second NSI, the query response carries the changed resource information, so that the remaining available capability is determined more accurately. For example, the load information of the second NSI mentioned above is specifically load information of the second NSI that exists after the allocation of the second NSI, the requirement information of the second NSI includes a performance requirement of the first CSI for the second NSI, and the correspondence between the second NSI and the another network resource includes a correspondence between the first CSI and the second NSI.

It should be understood that, when the resource information database 1031 is deployed in a distributed manner, and the query depth carried in the query request is 1, the resource information query server 1032 obtains corresponding resource information from each resource information database 1031 based on the index, for example, obtains CSI resource information from the CSI-level resource information database 1031, and obtains NSSI resource information from an NS SI-level resource information database 1031.

S719: The MDAS 104 determines the remaining available capability of the second NSI that exists after the allocation of the second NSI.

The MDAS 104 determines the remaining available capability based on the resource information of the second NSI. For details of the resource information of the second NSI, refer to S718. Details are not described again. It should be understood that, if the MDAS 104 further needs other information to determine the remaining available capability, or some information in the resource information of the second NSI is not stored in the resource information server 103, the MDAS 104 may further obtain required information from another device. For example, if the property information of the topology node of the second NSI does not include the load information, the MDAS 104 obtains the load information of the second NSI from the NWDAS 105. It should be understood that, in this case, steps 714 to 716 are not performed either.

The following describes a method for determining the remaining available capability by using the parameter maxNumberofUEs (a maximum quantity of user equipments) as an example. The resource information of the second NSI is first described. 1. maxNumberofUEs in the planning information of the second NSI is 5000. 2. maxNumberofUEsLoad in the load information of the second NSI is 2400. 3. Requirement information of the second NSI: maxNumberofUEsReq in the performance requirement of the first CSI is 1000; and maxNumberofUEsReq in a performance requirement of a second CSI is 2500. 3. Alarm information of the second NSI: None. 4. Correspondence with the second NSI: The first CSI and the second CSI are deployed above the second NSI; and the second NSI is deployed above a first NSSI, a second NSSI, and a third NSSI.

The MDAS 104 first performs an operation on the planning information of the second NSI and the load information of the second NSI, and performs a subtraction operation on the maximum quantity of user equipments to obtain a difference 2600. Then, adjustment is performed based on the requirement information and the alarm information of the second NSI. The maximum quantity of user equipments in the load information is 2400. However, in the performance requirements of the first CSI and the second CSI, a sum of maximum quantities of user equipments is 3500. The load information varies at different time, and the performance requirements of the first CSI and the second CSI are much greater than current load. Therefore, the difference 2600 is increased based on 3500, for example, adjusted to an intermediate value 3050. Because there is no alarm information, no further adjustment is required. In this case, a value of maxNumberofUEsCap in the remaining available capability of the second NSI that is obtained by the MDAS 104 is 3050.

There are a plurality of methods for determining the remaining available capability of the second NSI. This is not limited in this application. For details, refer to the descriptions of S506 in the embodiment shown in FIG. 5. Details are not described herein again.

S720: The MDAS 104 sends a capability update request to the resource information management server 1033, where the capability update request carries the remaining available capability of the second NSI that exists after the allocation of the second NSI.

S721: The resource information management server 1033 updates the available capability of the second NSI.

The resource information management server 1033 updates the available capability of the second NSI that is determined last time and that is originally stored in the resource information database 1031 to the remaining available capability of the second NSI that exists after the allocation of the second NSI.

S722: The resource information management server 1033 returns a capability update response to the MDAS 104.

It should be understood that the resource information management server 1033 further sends an update response (not shown in the figure) to the NSMS 203. The update response may be sent after the update request in S711 is received, or sent after the topology edge is established in S712, or sent after the available capability of the second NSI is updated in S721. In addition, after S715 and S721, the resource information management server 1033 may further send a resource change notification, to separately indicate that the load information of the second NSI changes and the available capability of the second NSI changes.

### Method 2:

S723: The resource information management server 1033 sends a load update request to the NWDAS 105, where the load update request carries the second NSI ID.

S724: The NWDAS 105 returns a load update response to the resource information management server 1033, where the load update response carries load information of the second NSI that exists after the allocation of the second NSI.

After receiving the load update request, the NWDAS 105 performs calculation to determine the load information of the second NSI ID that exists after the allocation of the second NSI.

S725: The resource information management server 1033 updates load information of the second NSI ID.

For details, refer to S715.

S726: The resource information management server 1033 sends an available capability update request to the MDAS 104, where the available capability update request carries the resource information of the second NSI.

In another implementation, the available capability update request carries only the second NSI ID. After receiving the available capability update request, the MDAS 104 sends a query request to the resource information query server 1032 to obtain the resource information of the second NSI. For details, refer to S717 and S718. Details are not described again.

S727: The MDAS 104 determines the remaining available capability of the second NSI that exists after the allocation of the second NSI.

For details, refer to S719. Details are not described again.

S728: The MDAS 104 returns an available capability update response to the resource information management server 1033, where the available capability update response carries the remaining available capability of the second NSI that exists after the allocation of the second NSI.

S729: The resource information management server 1033 updates the available capability of the second NSI.

For details, refer to S721. Details are not described again.

Similar to Method 1, in the scenario of Method 2, the resource information management server 1033 further sends an update response to the NSMS 203. The update response may be sent after the update request in S711 is received, or sent after the topology edge is established in S712, or sent after the available capability of the second NSI is updated in S729. The resource information management server 1033 may further broadcast a resource change notification after S712, S725, and S729, to notify another device of a resource information change in time.

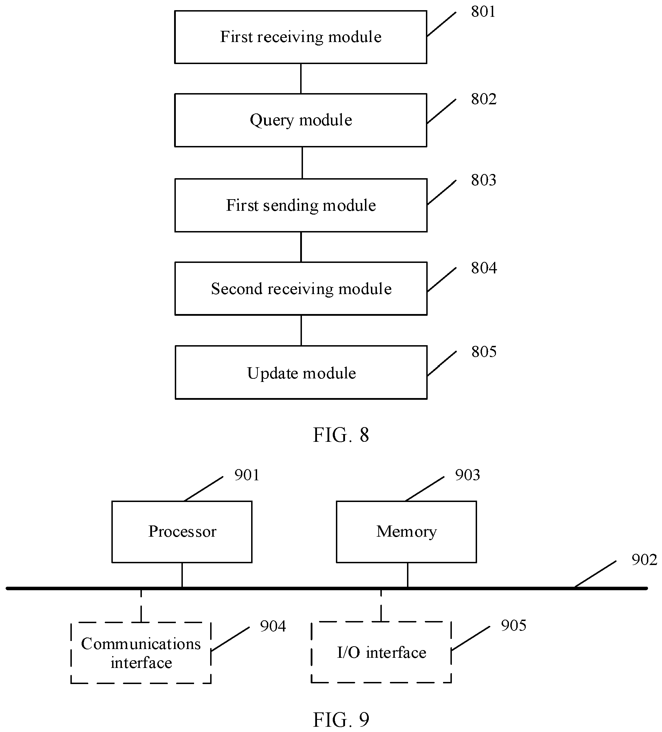

FIG. 8 shows a resource information server 103 according to an embodiment of this application. The resource information server includes a first receiving module 801, a query module 802, a first sending module 803, a second receiving module 804, and an update module 805.

The first receiving module 801 is configured to receive a query request sent by a resource scheduling server 106, where the query request carries a performance requirement for a first network resource, and the query request is used to query a first network resource whose available capability meets the performance requirement. The first network resource herein is specifically any one of a CSI, an NSI, an NSSI, or an NF. For specific content, refer to the step descriptions of the resource information server 103 (specifically, for example, the resource information query server 1032) in the foregoing embodiment, for example, steps 402 and 704.

The query module 802 is configured to determine, based on available capabilities of existing first network resources, first network resources whose available capabilities each meet the performance requirement (referred to as matched first network resources for short). For specific content, refer to the step descriptions of the resource information server 103 (specifically, for example, the resource information query server 1032 and the resource information database 1031) in the foregoing embodiment, for example, steps 403 and 705.

The first sending module 803 is configured to return identifiers of the matched first network resources to the resource scheduling server 106. For specific content, refer to the step descriptions of the resource information server 103 (specifically, for example, the resource information query server 1032) in the foregoing embodiment, for example, steps 404 and 705.

The second receiving module 804 is configured to receive an update request, where the update request carries an identifier of an allocated first network resource, and the allocated first network resource is one or more network resources in the matched first network resources, that is, the allocated first network resource is a first network resource that is finally allocated to meet the performance requirement. For specific content, refer to the step descriptions of the resource information server 103 (specifically, for example, the resource information query server 1032) in the foregoing embodiment, for example, steps 409, 600, and 711.

The update module 805 is configured to update an available capability of the allocated first network resource. For specific content, refer to the step descriptions of the resource information server 103 (specifically, for example, the resource information management server 1033 and the resource information database 1031) in the foregoing embodiment, for example, steps 410, 601 to 609, and 713 to 729.

Optionally, the resource information server 103 further includes a first storage module, configured to store the available capabilities of the existing first network resources. In addition, the update module 805 is specifically configured to update the available capability of the allocated first network resource that is stored in the first storage module.

In an implementation, the update module 805 includes a first obtaining module and an update submodule. The first obtaining module is configured to obtain, from a management data analytics server 104, a remaining available capability of the allocated first network resource that exists after the allocation of the first network resource. The update submodule is configured to update the originally stored available capability of the allocated first network resource to the remaining available capability. For specific content, refer to the step descriptions of the resource information server 103 (specifically, for example, the resource information database 1031, the resource information query server 1032, and the resource information management server 1033) in the foregoing embodiment, for example, steps 601, 605 to 609, 713, 711 to 721, and 726 to 729. Optionally, the resource information server 103 further includes: a second obtaining module, configured to obtain, from a network data analytics server 105, load information of the allocated first network resource that exists after the allocation of the first network resource; and a second sending module, configured to send, to the management data analytics server 104, the load information of the allocated first network resource that exists after the allocation of the first network resource. The remaining available capability is determined based on the load information of the allocated first network resource that exists after the allocation of the first network resource. For specific content, refer to the step descriptions of the resource information server 103 (specifically, for example, the resource information database 1031 and the resource information management server 1033) in the foregoing embodiment, for example, steps 601 to 607, 713 to 719, and 723 to 727.

Optionally, the resource information server 103 further includes a second storage module and a third sending module. The second storage module is configured to store resource information of the allocated first network resource. The third sending module is configured to send the resource information of the allocated first network resource to the management data analytics server, where the remaining available capability is determined based on the resource information of the allocated first network resource. For specific content, refer to the step descriptions of the resource information server 103 (specifically, for example, the resource information database 1031, the resource information query server 1032, and the resource information management server 1033) in the foregoing embodiment, for example, steps 605 to 607, 717 to 719, and 726 and 727. It should be understood that the second storage module includes the foregoing first storage module.

In this embodiment, the resource information server 103 is presented in a form of a function module. The "module" herein may be an application-specific integrated circuit (application-specific integrated circuit, ASIC), a circuit, a processor and a memory that execute one or more software or firmware programs, an integrated logic circuit, and/or another device that can provide the foregoing functions. In a simple embodiment, persons skilled in the art may figure out that the resource information server 103 may be implemented in a form shown in FIG. 9.

**FIG. 9** **is a schematic diagram of a computer device according to an embodiment of this application. The computer device includes at least one processor 901, a communications bus 902, and a memory 903, and may further include at least one communications interface 904 and an I/O interface 905. The processor may be a general-purpose central processing unit (CPU), a microprocessor, an application-specific integrated circuit (application-specific integrated circuit, ASIC), or one or more integrated circuits for controlling solution program execution in this application.**

The communications bus may include a path for transmitting information between the foregoing components. The communications interface is any type of apparatus such as a transceiver, and is configured to communicate with another device or a communications network, for example, an Ethernet, a radio access network (RAN), or a wireless local area network (Wireless Local Area Network, WLAN).

The memory may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compressed optical disc, a laser disc, an optical disc, a digital versatile disc, a Bluray disc, and the like), a magnetic disk storage medium or another magnetic storage device, or any other medium that can be used to carry or store expected program code in a form of an instruction or a data structure and that can be accessed by a computer. However, this is not limited thereto. The memory may exist independently, and is connected to the processor through the bus. The memory may alternatively be integrated with the processor.

The memory is configured to store program code for executing the solutions of this application, and the processor controls the execution. The processor is configured to execute the program code stored in the memory.

During specific implementation, the processor may include one or more CPUs, and each CPU may be a single-core (single-core) processor or a multi-core (multi-Core) processor. The processor herein may be one or more devices, circuits, and/or processing cores configured to process data (for example, computer program instructions).

During specific implementation, in an embodiment, the computer device may further include an input/output (I/O) interface. For example, an output device may be a liquid crystal display (liquid crystal display, LCD), a light emitting diode (light emitting diode, LED) display device, a cathode ray tube (cathode ray tube, CRT) display device, or a projector (projector). An input device may be a mouse, a keyboard, a touchscreen device, a sensing device, or the like.

The computer device may be a general-purpose computer device or a special-purpose computer device. During specific implementation, the computer device may be a desktop computer, a portable computer, a network server, a personal digital assistant (Personal Digital Assistant, PDA), a mobile phone, a tablet computer, a wireless terminal device, a communications device, an embedded device, or a device with a structure similar to that in FIG. 9. A type of the computer device is not limited in this embodiment of this application.

All devices in embodiments of this application such as the first management server 101, the second management server 102, the resource information server 103, the management data analytics server 104, the network data analytics server 105, and the resource scheduling server 106 each may use the structure of the general-purpose computer device shown in FIG. 9.

For example, when the processor in the first management server 101 executes executable code or an application stored in the memory, the first management server 101 may perform the method steps corresponding to the first management server 101 in all embodiments above. For a specific execution process, refer to embodiments above. Details are not described herein again.

For example, when the processor in the resource scheduling server 106 executes executable code or an application stored in the memory, the resource scheduling server 106 may perform the method steps corresponding to the resource scheduling server 106 in all embodiments above. For a specific execution process, refer to embodiments above. Details are not described herein again.

For example, when the processor in the MDAS 104 executes executable code or an application stored in the memory, the MDAS 104 may perform the method steps corresponding to the MDAS 104 in all embodiments above. For a specific execution process, refer to embodiments above. Details are not described herein again.

For example, when the processor in the resource information server 103 executes executable code or an application stored in the memory, the resource information server 103 may perform the method steps corresponding to the resource information server 103 in all embodiments above. For a specific execution process, refer to embodiments above. Details are not described herein again. It should be understood that the memory may further store resource information (for example, an available capability) of a first network resource.

In another implementation, the resource information server 103 includes a resource information database 1031, a resource information query server 1032, and a resource information management server 1033. The resource information database 1031, the resource information query server 1032, and the resource information management server 1033 each may use the structure of the general-purpose computer device shown in FIG. 9. For example, when the processor in the resource information database 1031 executes executable code or an application stored in the memory, the resource information database 1031 may perform the method steps corresponding to the resource information database 1031 in all embodiments above. For a specific execution process, refer to embodiments above. Details are not described herein again. In addition, for the resource information database 1031, the memory further stores resource information (such as an available capability) of a first network resource.

An embodiment of this application further provides a computer-readable storage medium, configured to store computer software instructions used by the device (the resource information server 103) shown in FIG. 9. The computer-readable storage medium includes a program designed to execute the foregoing method embodiments. The foregoing methods can be implemented by executing the stored program.

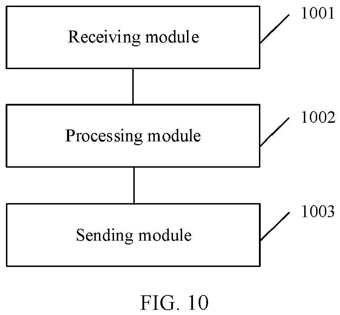

**FIG. 10** **shows an MDAS 104 according to an embodiment of this application. The MDAS 104 includes a receiving module 1001, a processing module 1002, and a sending module 1003.**

The receiving module 1001 is configured to receive a resource change notification, where the resource change notification carries an identifier of a first network resource whose resource information changes. For specific content, refer to step 601 and the like in the foregoing embodiment.

The processing module 1002 is configured to determine a remaining available capability of the first network resource based on the resource information of the first network resource. For specific content, refer to steps 605 to 607 and the like in the foregoing embodiment.

The sending module 1003 is configured to send the remaining available capability of the first network resource to a resource information management server to update an available capability of the first network resource. For specific content, refer to step 608 and the like in the foregoing embodiment.

Optionally, the receiving module 1001 and/or the sending module 1003 are/is further configured to obtain the resource information of the first network resource from the resource information management server or a resource information query server. For specific content, refer to steps 605 and 606 and the like in the foregoing embodiment.

Optionally, the receiving module 1001 is further configured to receive a performance requirement that is for a first network resource and that is sent by a first management server. For specific content, refer to step 401 and the like in the foregoing embodiment. The processing module 1002 is further configured to obtain matched first network resources according to the performance requirement for a first network resource, where available capabilities of the matched first network resources each meet the performance requirement for a first network resource. For specific content, refer to steps 402 to 404 and the like in the foregoing embodiment. The sending module 1003 is further configured to return identifiers of the matched first network resources to the first management server. The foregoing first network resource whose resource information changes is an allocated first network resource, and the allocated first network resource is one or more network resources in the matched first network resources.

Optionally, the receiving module 1001 is further configured to receive a performance requirement that is for a first network resource and that is sent by a first management server. For specific content, refer to step 401 and the like in the foregoing embodiment. The processing module 1002 is further configured to obtain matched first network resources according to the performance requirement for a first network resource, where available capabilities of the matched first network resources each meet the performance requirement for a first network resource. For specific content, refer to steps 402 to 404 and the like in the foregoing embodiment. The processing module 1002 is further configured to determine an allocated first network resource from the matched first network resources based on a scheduling algorithm. For specific content, refer to step 405 and the like in the foregoing embodiment. The sending module 1003 is further configured to return an identifier of the allocated first network resource to the first management server. For specific content, refer to step 406 and the like in the foregoing embodiment. The foregoing first network resource whose resource information changes is an allocated first network resource, and the allocated first network resource is one or more network resources in the matched first network resources.

In an implementation, that the processing module 1002 is configured to determine matched first network resources according to the performance requirement for a first network resource includes: The processing module 1002 sends a query request to the resource information query server by using the sending module 1003, where the query request carries the performance requirement for a first network resource, and the query request is used to query a first network resource whose available capability meets the performance requirement. For specific content, refer to step 402 and the like in the foregoing embodiment. The receiving module 1001 is configured to receive the identifiers of the matched first network resources that are returned by the resource information query server. For specific content, refer to step 404 and the like in the foregoing embodiment.

It should be understood that the MDAS 104 may further have functions of completing the method performed by the MDAS 104 in the foregoing embodiment. Details are not described herein again.

In this embodiment, the MDAS 104 is presented in a form of a function module. The "module" herein may be an ASIC, a circuit, a processor and a memory that execute one or more software or firmware programs, an integrated logic circuit, and/or another device that can provide the foregoing functions. In a simple embodiment, persons skilled in the art may figure out that the MDAS 104 may be implemented in a form shown in FIG. 9.

In the descriptions of this application, "/" represents an "or" relationship between associated objects unless otherwise specified. For example, A/B may represent A or B. A term "and/or" in this application represents only an association relationship between associated objects and represents that three relationships may exist. For example, A and/or B may represent the following three cases: Only A exists, both A and B exist, and only B exists, where A and B may be singular or plural. In addition, in embodiments of this application, terms such as "first" and "second" are used to distinguish between same objects or similar objects whose functions and purposes are basically the same, to clearly describe the technical solutions in embodiments of this application. Persons skilled in the art may understand that the terms such as "first" and "second" do not limit a quantity or an execution sequence, and the terms such as "first" and "second" do not indicate a definite difference. In the claims, a word "comprising" (comprising) does not exclude another component or another step, and "a" or "one" does not exclude a case of plurality. A single processor or another module may implement several functions enumerated in the claims. Some measures are recorded in dependent claims that are different from each other, but this does not mean that these measures cannot be combined to produce a better effect.

Persons of ordinary skill in the art may be aware that, in combination with the examples described in embodiments disclosed in this specification, modules and algorithm steps can be implemented by electronic hardware, computer software, or a combination thereof. To clearly describe the interchangeability between hardware and software, the foregoing has generally described compositions and steps of the examples based on functions. Whether the functions are performed by hardware or software depends on particular applications and design constraints of the technical solutions. Persons skilled in the art may use different methods to implement the described functions for each particular application, but it should not be considered that the implementation goes beyond the scope of this application.

It may be clearly understood by persons of ordinary skill in the art that, for ease and brief description, for a detailed working process of the foregoing system, apparatus, and modules, refer to a corresponding process in the foregoing method embodiments. Details are not described herein again.

In several embodiments provided in this application, it should be understood that the disclosed system, apparatus, and method may be implemented in other manners. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, that is, may be located in one location, or may be distributed on a plurality of network modules. Some or all of the modules may be selected according to actual requirements to achieve the objectives of the solutions in embodiments of this application.

In addition, function modules in embodiments of this application may be integrated into one processing module, or each of the modules may exist alone physically, or two or more modules may be integrated into one module. The integrated module may be implemented in a form of hardware, or may be implemented in a form of a software function module.

When the integrated module is implemented in the form of a software function module and sold or used as an independent product, the integrated module may be stored in a computer-readable storage medium. Based on such an understanding, the technical solutions of this application essentially, or a part contributing to the conventional technology, or all or some of the technical solutions may be embodied in a form of a computer program product. The computer program product includes one or more computer instructions. When the computer program instructions are loaded and executed on a computer, all or some of the procedure or functions according to embodiments of this application are generated. The computer may be a general-purpose computer, a special-purpose computer, a computer network, or another programmable apparatus. The computer program product is stored in a computer-readable storage medium or is transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid-state drive (solid-state drive, SSD)), or the like.

The foregoing descriptions are merely specific implementations of this application, but are not intended to limit the protection scope of this application. Any equivalent modification or replacement readily figured out by persons skilled in the art within the technical scope disclosed in this application shall fall within the protection scope of this application. Therefore, the protection scope of this application shall be subject to the protection scope of the claims.

## Claims

1. A network resource management method, wherein the method comprises:
receiving a query request sent by a resource scheduling server, wherein the query request carries a performance requirement for a first network resource, and the first network resource is one of a communication service instance, a network slice instance, a network slice subnet instance, or a network function;
determining matched first network resources based on available capabilities of existing first network resources, wherein available capabilities of the matched first network resources each meet the performance requirement; and
returning identifiers of the matched first network resources to the resource scheduling server.

2. The method according to claim 1, further comprising:
receiving an update request, wherein the update request carries an identifier of an allocated first network resource, and the allocated first network resource is one or more network resources in the matched first network resources; and
updating an available capability of the allocated first network resource.

3. The method according to claim 2, wherein the updating an available capability of the allocated first network resource comprises:
obtaining, from a management data analytics server, a remaining available capability of the allocated first network resource that exists after the allocation of the first network resource; and
updating the available capability of the allocated first network resource to the remaining available capability.

4. The method according to claim 3, further comprising:
obtaining, from a network data analytics server, load information of the allocated first network resource that exists after the allocation of the first network resource; and
sending, to the management data analytics server, the load information of the allocated first network resource that exists after the allocation of the first network resource, wherein the remaining available capability is determined based on the load information of the allocated first network resource that exists after the allocation of the first network resource.

5. The method according to claim 3 or 4, wherein the remaining available capability is determined based on resource information of the allocated first network resource, and the resource information of the allocated first network resource comprises one or more of the following information: planning information of the allocated first network resource, the load information of the allocated first network resource that exists after the allocation of the first network resource, information about a requirement for the allocated first network resource, an available capability of the allocated first network resource that is determined before the allocation of the first network resource, alarm information of the allocated first network resource, and a correspondence between the allocated first network resource and another network resource.

6. The method according to claim 5, wherein the method further comprises:
sending the stored resource information of the allocated first network resource to the management data analytics server.

7. The method according to any one of claims 1 to 6, wherein the available capabilities of the existing first network resources are obtained through periodic update by the management data analytics server.

8. The method according to any one of claims 1 to 7, wherein the performance requirement for a first network resource is a performance requirement of a to-be-deployed second network resource for a first network resource, the update request further carries an identifier of the to-be-deployed second network resource, and the method further comprises:
establishing a correspondence between the to-be-deployed second network resource and the allocated first network resource in response to the update request, wherein the correspondence indicates that the to-be-deployed second network resource is deployed above the allocated first network resource.

9. A network resource management method, wherein the method comprises:
sending, by a first management server, a performance requirement for a first network resource to a management data analytics server, wherein the first network resource is one of a communication service instance, a network slice instance, a network slice subnet instance, or a network function;
obtaining, by the management data analytics server, matched first network resources according to the performance requirement, and returning identifiers of the matched first network resources to the first management server, wherein available capabilities of the matched first network resources each meet the performance requirement; and
determining, by the first management server, to use an allocated first network resource, wherein the allocated first network resource is one or more network resources in the matched first network resources.

10. The method according to claim 9, further comprising:
triggering, by the first management server, update of an available capability of the allocated first network resource.

11. The method according to claim 9 or 10, wherein the obtaining, by the management data analytics server, matched first network resources according to the performance requirement comprises:
sending, by the management data analytics server, a query request to a resource information query server, wherein the query request carries the performance requirement for a first network resource; and receiving information that is about the matched first network resources and that is returned by the resource information query server, wherein the matched first network resources are determined based on available capabilities of existing first network resources.

12. The method according to claim 10, wherein the triggering, by the first management server, update of an available capability of the allocated first network resource comprises:
sending, by the first management server, an update request to a resource information management server, wherein the update request carries an identifier of the allocated first network resource, and the update request is used to trigger update of the available capability of the allocated first network resource.

13. The method according to claim 12, further comprising:
receiving, by the management data analytics server, a resource change notification, wherein the resource change notification carries the identifier of the allocated first network resource, to indicate that resource information of the allocated first network resource changes, and the resource change notification is sent after the resource information management server receives the update request; and
determining, by the management data analytics server, a remaining available capability of the allocated first network resource that exists after the allocation of the first network resource, wherein the remaining available capability is used to update the available capability of the allocated first network resource.

14. The method according to claim 10, wherein the triggering, by the first management server, update of an available capability of the allocated first network resource comprises:
sending, by the first management server, a resource change notification, wherein the resource change notification carries an identifier of the allocated first network resource, to indicate that resource information of the allocated first network resource changes; and
after receiving the resource change notification, determining, by the management data analytics server, a remaining available capability of the allocated first network resource that exists after the allocation of the first network resource, and sending the remaining available capability to the resource information management server, wherein the remaining available capability is used to update the available capability of the allocated first network resource.

15. The method according to claim 13 or 14, wherein the determining, by the management data analytics server, a remaining available capability of the allocated first network resource that exists after the allocation of the first network resource comprises:
determining, by the management data analytics server, the remaining available capability based on the resource information of the allocated first network resource, wherein the resource information of the allocated first network resource comprises one or more of the following information: planning information of the allocated first network resource, load information of the allocated first network resource that exists after the allocation of the first network resource, information about a requirement for the allocated first network resource, an available capability of the allocated first network resource that is determined before the allocation of the first network resource, alarm information of the allocated first network resource, and a correspondence between the allocated first network resource and another network resource.

16. The method according to claim 15, further comprising:
obtaining, by the management data analytics server, the resource information of the allocated first network resource from the resource information management server or a resource information query server.

17. The method according to any one of claims 11 to 16, further comprising:
periodically updating, by the management data analytics server, the available capabilities of the existing first network resources to the resource information management server.

18. The method according to any one of claims 11 to 17, wherein the determining, by the first management server, to use an allocated first network resource comprises:
determining, by the first management server, the allocated first network resource from the matched first network resources based on a scheduling algorithm.

19. A resource information server, comprising:
a first receiving module, configured to receive a query request sent by a resource scheduling server, wherein the query request carries a performance requirement for a first network resource, and the first network resource is one of a communication service instance, a network slice instance, a network slice subnet instance, or a network function;
a query module, configured to determine matched first network resources based on available capabilities of existing first network resources that are stored in a first storage module, wherein available capabilities of the matched first network resources each meet the performance requirement; and
a first sending module, configured to return identifiers of the matched first network resources to the resource scheduling server.

20. The server according to claim 19, further comprising:
a second receiving module, configured to receive an update request, wherein the update request carries an identifier of an allocated first network resource, and the allocated first network resource is one or more network resources in the matched first network resources; and
an update module, configured to update an available capability of the allocated first network resource that is stored in the first storage module.

21. The server according to claim 20, further comprising:
a first obtaining module, configured to obtain, from a management data analytics server, a remaining available capability of the allocated first network resource that exists after the allocation of the first network resource; and
an update submodule, configured to update the available capability of the allocated first network resource that is stored in the first storage module to the remaining available capability.

22. The server according to claim 21, further comprising:
a second obtaining module, configured to obtain, from a network data analytics server, load information of the allocated first network resource that exists after the allocation of the first network resource; and
a second sending module, configured to send, to the management data analytics server, the load information of the allocated first network resource that exists after the allocation of the first network resource, wherein the remaining available capability is determined based on the load information of the allocated first network resource that exists after the allocation of the first network resource.

23. The server according to claim 21 or 22, further comprising:
a second storage module, configured to store resource information of the allocated first network resource, wherein the resource information of the allocated first network resource comprises one or more of the following information: planning information of the allocated first network resource, the load information of the allocated first network resource that exists after the allocation of the first network resource, information about a requirement for the allocated first network resource, an available capability of the allocated first network resource that is determined before the allocation of the first network resource, alarm information of the allocated first network resource, and a correspondence between the allocated first network resource and another network resource; and
a third sending module, configured to send the resource information of the allocated first network resource to the management data analytics server, wherein the remaining available capability is determined based on the resource information of the allocated first network resource.

24. The server according to any one of claims 20 to 23, wherein the available capabilities of the existing first network resources that are stored in the first storage module are obtained through periodic update by the management data analytics server.

25. A network resource system, wherein the system comprises a first management server and a management data analytics server, wherein
the first management server and the management data analytics server are respectively configured to perform the method performed by the first management server according to any one of claims 9 to 18 and the method performed by the management data analytics server according to any one of claims 9 to 18.

26. The system according to claim 25, further comprising a resource information server, wherein the resource information server is configured to perform the method according to any one of claims 1 to 8.
